# EUROPEAN PATENT APPLICATION

(11) **EP 4 651 021 A1**
(43) Date of publication of application: **19.11.2025**
(21) Application number: 24875764.3
(22) Date of filing: 27.03.2024
(51) Int. Cl.: G06K 19/06, G06K 7/14, G09G 5/10, G06Q 20/32, G09G 5/373

(54) **DISPLAY CONTROL PROGRAM, DISPLAY CONTROL DEVICE, AND DISPLAY CONTROL METHOD**

(71) Applicant: Rakuten Group, Inc., Tokyo 158-0094 (JP)
(72) Inventor: ENDO, Daiki, Tokyo, 1080075 (JP); FUKUI, Kenji, Tokyo, 1080075 (JP)
(74) Representative: EIP
(86) International application number: PCT/JP2024/012376
(87) International publication number: WO 2025/203352

(57) **Abstract**

Provided is a program for causing a display control device (10) to function as: a display control module (102) which displays a code screen including a code on a display unit (15) of the display control device (10); and an attitude information acquisition module (103) which acquires, when the code screen is displayed on the display unit (15), attitude information about an attitude of the display control device (10). The display control module (102) changes display of the code screen based on the attitude information.

## Description

### Technical Field

The present disclosure relates to a program, a display control device, and a display control method.

### Background Art

A technology for displaying a code screen including a code such as a barcode or a two-dimensional code on a display unit of a display control device has hitherto been known. In Patent Literature 1, for example, there is described an information code reading system in which, when a display changing instruction is acquired from a payment device by decoding a code for instruction of which an image is picked up by an image pickup unit on a mobile terminal, a display unit is controlled by a control unit so as to change a display state of a code for payment in accordance with the display changing instruction.

### Citation List

### Patent Literature

[PTL 1] JP 2019-061427 A

### Summary of Invention

### Technical Problem

However, with the technology of Patent Literature 1, a reading device is required to issue a display changing instruction in order for the mobile terminal to change the display state of the code for payment and accordingly, the technology has failed to enhance user convenience satisfactorily. This is not limited to codes for payment as in

Patent Literature 1. The same applies to cases in which a code screen is used for purposes other than payment. No technologies of the related art have succeeded in enhancing user convenience satisfactorily in cases in which a code screen is displayed.

One object of the present disclosure is to enhance user convenience.

### Solution to Problem

According to one embodiment of the present disclosure, there is provided a program for causing a display control device to function as: a display control module configured to display a code screen including a code on a display unit of the display control device; and an attitude information acquisition module configured to acquire, when the code screen is displayed on the display unit, attitude information about an attitude of the display control device, wherein the display control module is configured to change display of the code screen based on the attitude information.

### Advantageous Effects of Invention

According to the present disclosure, the user convenience is enhanced.

### Brief Description of Drawings

FIG. 1 is a diagram for illustrating an example of a hardware configuration of a display control system.
FIG. 2 is a diagram for illustrating an example of how a user uses a payment service.
FIG. 3 is a diagram for illustrating an example of a change of attitude of a display control device that occurs in reading of a code.
FIG. 4 is a diagram for illustrating an example of a code screen in which a size of a code is dynamically changed based on the attitude of the display control device.
FIG. 5 is a diagram for illustrating an example of functions implemented in a first embodiment of the present disclosure.
FIG. 6 is a diagram for illustrating an example of attitude information.
FIG. 7 is a diagram for illustrating an example of processing executed in the first embodiment.
FIG. 8 is a diagram for illustrating an example of functions implemented in a second embodiment of the present disclosure.
FIG. 9 is a diagram for illustrating an example of processing executed in the second embodiment.
FIG. 10 is a diagram for illustrating an example of functions implemented in modification examples of the first embodiment.
FIG. 11 is a diagram for illustrating an example of a change of attitude of the display control device that occurs in reading of a code.
FIG. 12 is a diagram for illustrating an example of a change of attitude of the display control device that occurs in reading of a code.
FIG. 13 is a diagram for illustrating an example of a reference attitude.
FIG. 14 is a diagram for illustrating an example of upper-side content and lower-side content.
FIG. 15 is a diagram for illustrating an example of a code screen that changes brightness in accordance with the attitude of the display control device.
FIG. 16 is a diagram for illustrating an example of how the size of a code is repeatedly changed.
FIG. 17 is a diagram for illustrating an example of functions implemented in modification examples of the second embodiment.
FIG. 18 is a diagram for illustrating an example of a reference degree.
FIG. 19 is a diagram for illustrating an example of a photographed image.

### Description of Embodiments

### [1. First Embodiment]

A first embodiment of the present disclosure, which is an example of modes of carrying out a program, a display control device, and a display control method according to the present disclosure, is described. In the first embodiment, a display control system including the display control device and other devices is taken as an example.

### [1-1. Hardware Configuration of Display Control System]

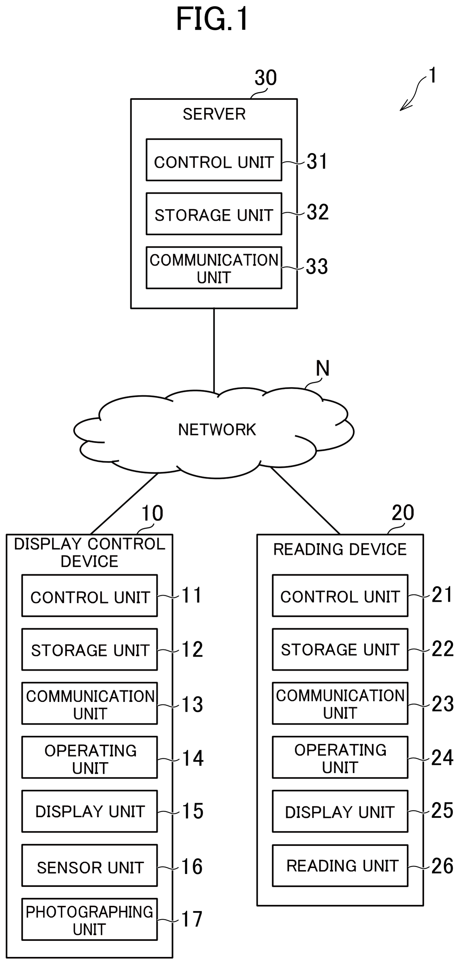

FIG. 1 is a diagram for illustrating an example of a hardware configuration of the display control system. For example, a display control system 1 includes a display control device 10, a reading device 20, and a server 30. Each of the display control device 10, the reading device 20, and the server 30 is connected to a network N, such as the Internet or a LAN. In FIG. 1, one display control device 10, one reading device 20, and one server 30 are illustrated, but for at least one of the display control device 10, the reading device 20, or the server 30, a plurality thereof may exist.

The display control device 10 is a device for controlling display of a code screen described later. For example, the display control device 10 is a smartphone, a mobile phone that is not classified as a smartphone, a tablet computer, a wearable terminal, a handy terminal, or a personal computer. The display control device 10 may be a portable device that is not classified as one of those. The display control device 10 may be a non-portable device. In the first embodiment, it is sufficient for the display control device 10 to be a device of which an attitude is changeable.

The display control device 10 includes, for example, a control unit 11, a storage unit 12, a communication unit 13, an operation unit 14, a display unit 15, a sensor unit 16, and a photographing unit 17. The control unit 11 includes at least one processor. The storage unit 12 includes at least one of a volatile memory such as a RAM or a nonvolatile memory such as a flash memory. The communication unit 13 includes at least one of a communication interface for wired communication or a communication interface for wireless communication. The operation unit 14 is an input device, such as a touch panel or a mouse. The display unit 15 is a display, such as a liquid crystal display or an organic EL display.

The sensor unit 16 includes, for example, at least one sensor. In the first embodiment, the sensor unit 16 includes a sensor used to detect an attitude of the display control device 10. The sensor used to detect the attitude of the display control device 10 can be a publicly-known sensor. For example, the sensor unit 16 may include an acceleration sensor, a gyroscope sensor, a geomagnetic sensor, or an angle sensor, or a combination of those. The sensor unit 16 may include a sensor called a motion sensor including a plurality of sensors out of those. The sensor unit 16 may include other sensors that are not used for detection of the attitude of the display control device 10.

The photographing unit 17 includes, for example, at least one camera. The photographing unit 17 may include at least one of a front-facing camera or a rear-facing camera. The front-facing camera is a camera placed on a surface of the display control device 10 that is the same surface as a surface on which the display unit 15 is placed. The rear-facing camera is a camera placed on a surface of the display control device 10 that is opposite from the surface on which the display unit 15 is placed. In the first embodiment, a case in which the photographing unit 17 is a component separate from the sensor unit 16 is taken as an example. However, optical elements included in the photographing unit 17 are a type of sensors as well, and the photographing unit 17 may accordingly be a part of the sensor unit 16.

The reading device 20 is a device for reading codes described later. For example, the reading device 20 is a POS terminal, a self-checkout cash register, a smartphone, a mobile phone that is not classified as a smartphone, a tablet computer, a wearable terminal, a handy terminal, an ATM, an automatic ticket gate machine, or a personal computer. The reading device 20 includes, for example, a control unit 21, a storage unit 22, a communication unit 23, an operation unit 24, a display unit 25, and a reading unit 26. The control unit 21, the storage unit 22, the communication unit 23, the operation unit 24, and the display unit 25 may have the same hardware configurations as the hardware configurations of the control unit 11, the storage unit 12, the communication unit 13, the operation unit 14, and the display unit 15, respectively.

The reading unit 26 includes, for example, at least one code reader. The reading unit 26 may include a publicly-known code reader. For example, the reading unit 26 may include a barcode reader, a two-dimensional-code reader, a camera, or a scanner, or a combination of those. In the first embodiment, a case in which the reading unit 26 is included in the reading device 20 is taken as an example. However, the reading unit 26 may be connected outside the reading device 20. The reading device 20 may be designed so as to include the reading unit 26 alone without including the control unit 21, the storage unit 22, the communication unit 23, the operation unit 24, and the display unit 25.

The server 30 is a server computer. The server 30 includes, for example, a control unit 31, a storage unit 32, and a communication unit 33. The control unit 31, the storage unit 32, and the communication unit 33 may have the same hardware configurations as the hardware configurations of the control unit 11, the storage unit 12, and the communication unit 13, respectively.

Programs stored in the storage units 12, 22, and 32 may be supplied to the display control device 10, the reading device 20, or the server 30, respectively, via the network N. Moreover, at least one of a reading unit (for example, a memory card slot) for reading a computer-readable information storage medium or an input/output unit (for example, a USB port) for inputting/outputting data from/to an external device may be included in the display control device 10, the reading device 20, or the server 30. For example, a program stored in an information storage medium may be supplied to the display control device 10, the reading device 20, or the server 30 via at least one of the reading unit or the input/output unit.

The display control system 1 is only required to include at least one computer. The computers included in the display control system 1 is not limited to the example of FIG. 1. For example, the display control system 1 may include only the display control device 10 and the reading device 20. In this case, the server 30 exists outside the display control system 1. The display control system 1 may include only the display control device 10 and the server 30. In this case, the reading device 20 exists outside the display control system 1. The display control system 1 may include only the display control device 10. In this case, the reading device 20 and the server 30 exist outside the display control system 1. For example, the display control system 1 may include the display control device 10 and another computer not shown in FIG. 1.

### [1-2. Outline of First Embodiment]

In the first embodiment, a case in which the display control system 1 is used in a payment service is taken as an example. The payment service is a service that provides means of electronic payment (cashless payment) to a user. The display control system 1 may be used in services other than the payment service. Services in which the display control system 1 is used are not limited to the payment service. The display control system 1 may be used in services that use a code in some way. For example, the display control system 1 may be used in an electronic ticket service, a coupon delivery service, an entrance and exit management service, a check-in service, a communication service, a financial service, a travel reservation service, an electronic commerce service, a public transportation service, a government service, or other services.

In the first embodiment, a case in which a smartphone of a user who uses a payment service corresponds to the display control device 10 is taken as an example. For example, a payment application, which is an application for a payment service, is installed in the display control device 10 in advance. The payment application is an example of the program according to the present disclosure. The display control device 10 controls display of various screens in the payment service based on the payment application. The display control device 10 may control display of the various screens based on a program other than the payment application, such as a browser (for example, a script embedded in HTML, an application of a service other than the payment service, or an operating system).

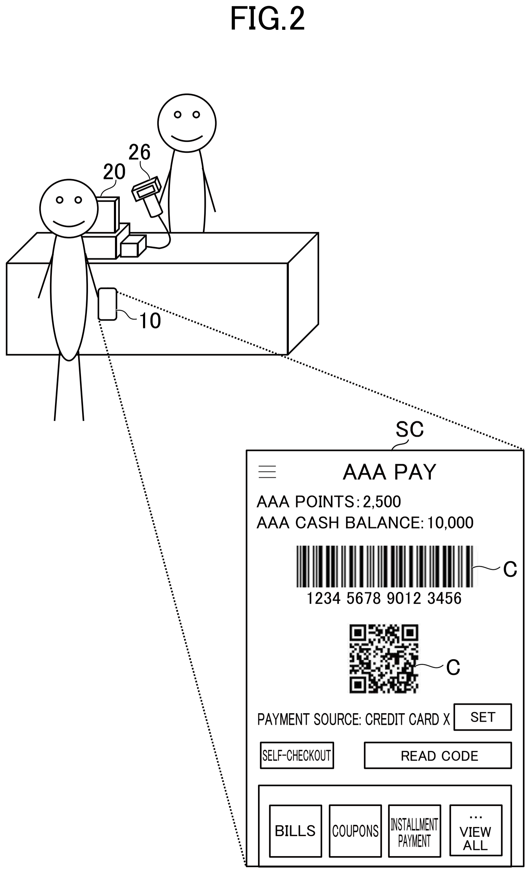

FIG. 2 is a diagram for illustrating an example of how the user uses the payment service. For example, when the user starts the payment application installed in the display control device 10, the display control device 10 holds communication to and from the server 30 to execute login processing for login of the user to the payment service. When the login processing succeeds, the display control device 10 holds communication to and from the server 30 to display, on the display unit 15, a code screen SC including a code C which is generated based on information required for payment (for example, a code ID by which the user is temporarily identifiable).

In the first embodiment, a case in which the code C includes both of a barcode and a two-dimensional code is taken as an example. However, the code C may be designed so that a barcode alone corresponds to the code C, or a two-dimensional code alone corresponds to the code C. That is, the code screen SC may include both of or one of a barcode and a two-dimensional code. The code C may be a publicly-known code. In a case in which a different code (for example, a code that changes appearance with time) that is not classified as a barcode or a two-dimensional code is used, the code C may be the different code.

The code C is usable for any purpose. In the example of FIG. 2, a case in which the code C is used in payment based on a payment source specified by the user is taken as an example, but the code C may be used for a different purpose. For example, the code C may be used as a reward points card, may be used to load electronic money or to identify a coupon, may be used to check the user in to a predetermined place, or may be used as an identification certificate such as a membership certificate. In a case in which the display control device 10 is used in a service other than the payment service, the code C is designed to be used for any purpose in the other service.

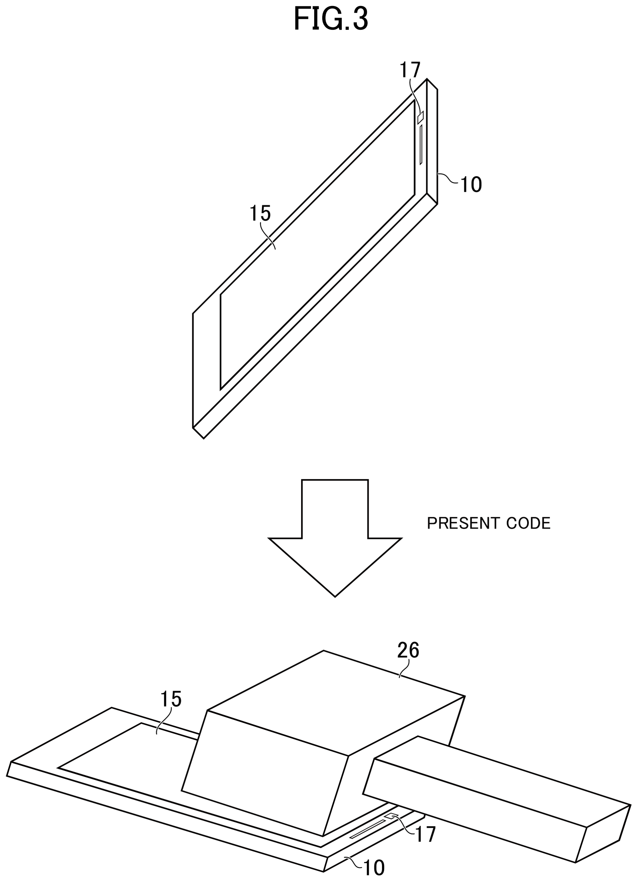

FIG. 3 is a diagram for illustrating an example of a change of attitude of the display control device 10 that occurs in reading of the code C. In FIG. 3, details of the code screen SC are omitted. In the first embodiment, a case in which the user uses the payment service to pay for an article or a service at a store that is a member of the payment service is taken as an example. In the example of FIG. 3, it is assumed that the user is to the left of the display control device 10. A shop clerk is assumed to be to the right of the display control device 10. As in the upper illustration of FIG. 3, the user grips the display control device 10 at an attitude at which the display unit 15 of the display control device 10 faces the user's face. The user starts the payment application with the attitude of the display control device 10 being maintained, and checks to see that the code screen SC is displayed on the display unit 15.

For example, once confirming that the code screen SC is displayed on the display unit 15, the user changes the attitude of the display control device 10 as in the lower illustration of FIG. 3 so that the display unit 15 of the display control device 10 faces toward the shop clerk to present the code screen SC to the shop clerk. The shop clerk uses the reading unit 26 to read the code C of the code screen SC displayed on the display unit 15 that is facing himself or herself. When the code C is read, the reading device 20 holds communication to and from the server 30 to execute payment. A flow of the payment using the code C may be the same as a publicly-known flow of the payment service.

For example, at a stage at which the user starts the payment application and checks to see that the code screen SC is displayed as in the upper illustration of FIG. 3, the code C having too large a size may be low in visibility. At a stage at which the user presents the code screen SC to the shop clerk as in the lower illustration of FIG. 3, on the other hand, the code C larger in size may be easier to read with the reading unit 26. Accordingly, in the first embodiment, the display control device 10 dynamically changes the size of the code C based on its own attitude.

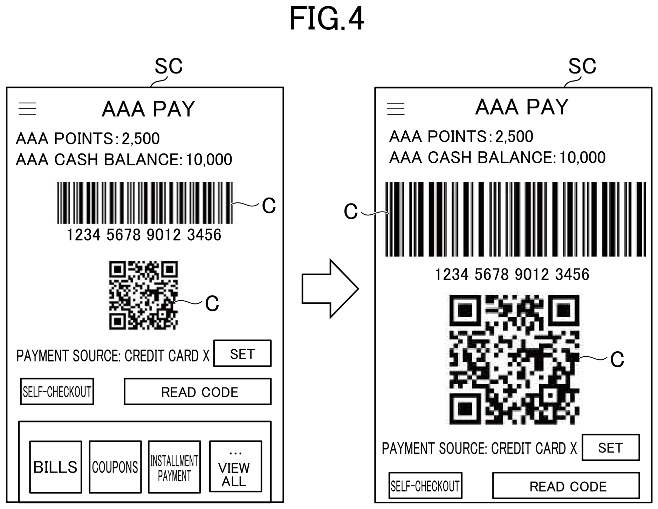

FIG. 4 is a diagram for illustrating an example of the code screen SC in which the size of the code C is dynamically changed based on the attitude of the display control device 10. The code screen SC on the left-hand side of FIG. 4 is an example of the code screen SC in the case in which the display control device 10 is at the attitude of the upper illustration of FIG. 3. The display control device 10 displays the code C with some margins as on the left-hand side of FIG. 4, instead of displaying the code C to a full width of the display unit 15. This raises visibility for the user. For example, this makes it easier for the user to check not only the code C but also other portions of the code screen SC.

The code screen SC on the right-hand side of FIG. 4 is an example of the code screen SC in the case in which the display control device 10 is at the attitude of the lower illustration of FIG. 3. As on the right-hand side of FIG. 4, the display control device 10 changes the size of the code C so that the code C is displayed to the full width of the display unit 15. In the example of the right-hand side of FIG. 4, the barcode that is a part of the code C stretches to the full width of the display unit 15, and the two-dimensional code that is a part of the code C may stretch to the full width of the display unit 15 as well. Although the visibility for the user slightly drops under a state of the right-hand side of FIG. 4, ease of reading the code C is given priority at the stage at which the user presents the code C. With the code C displayed in a large size, it is easier for the reading unit 26 to read the code C.

The display control device 10 may be designed so as to return the code C to an original size (the size on the left-hand side of FIG. 4) once the reading of the code C is completed. In a case in which the user returns the attitude of the display control device 10 to the attitude of the upper illustration of FIG. 3 before the reading of the code C is completed, the display control device 10 may return the code C to the original size (the size on the left-hand side of FIG. 4). In a case in which the user subsequently changes the attitude of the display control device 10 back to the attitude of the lower illustration of FIG. 3, the display control device 10 may increase the size of the code C again.

As described above, the display control device 10 of the first embodiment controls display of the code screen SC so that the size of the code C changes based on its own attitude. For example, at the attitude at which the display unit 15 faces the user's face, the display control device 10 keeps the displayed code C at not so large a size to improve the visibility of the code screen SC. At the attitude at which the user presents the code C, the display control device 10 increases the size of the code C in preparation for the reading. The display control device 10 can thus enhance user convenience. The following is description on details of the display control system 1 in the first embodiment.

### [1-3. Functions Implemented in First Embodiment]

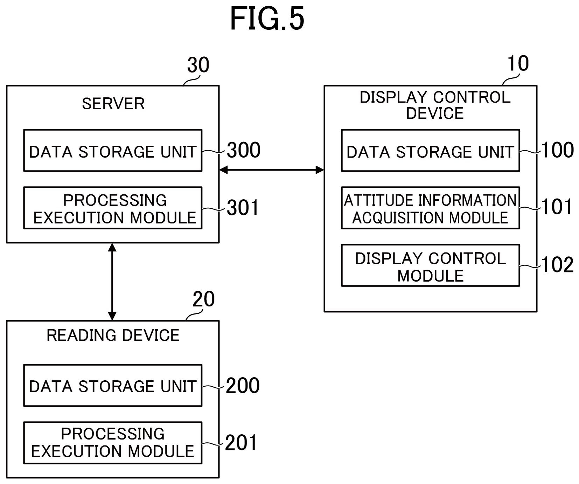

FIG. 5 is a diagram for illustrating an example of functions implemented in the first embodiment.

### [1-3-1. Functions Implemented in Display Control Device]

The display control device 10 includes, for example, a data storage unit 100, an attitude information acquisition module 101, and a display control module 102. The data storage unit 100 is implemented by the storage unit 12. Each of the attitude information acquisition module 101 and the display control module 102 is implemented by the control unit 11.

### [Data Storage Unit]

The data storage unit 100 stores data required to display the code screen SC. For example, the data storage unit 100 stores the payment application. The payment application causes the display control device 10 to function as the attitude information acquisition module 101 and the display control module 102. In a case in which the user uses the payment service from a program other than the payment application, such as a browser, the data storage unit 100 stores the other program. The other program causes the display control device 10 to function as the attitude information acquisition module 101 and the display control module 102.

### [Attitude Information Acquisition Module]

The attitude information acquisition module 101 acquires attitude information about an attitude of the display control device 10 when the code screen SC is displayed on the display unit 15. The attitude of the display control device 10 is at least one of a tilt or a direction of the display control device 10. Both of the tilt and the direction of the display control device 10 may correspond to the attitude of the display control device 10, or only one of the tilt and the direction of the display control device 10 may correspond to the attitude of the display control device 10. The attitude information acquisition module 101 may acquire the attitude information before the code screen SC is displayed on the display unit 15.

For example, in a case in which the display control device 10 is integrated with the display unit 15, it can be said that the attitude of the display control device 10 is the attitude of the display unit 15. In a case in which the display control device 10 is not integrated with the display unit 15 (for example, a case in which a main body of the display control device 10 and the display unit 15 are connected to each other by a cable), the attitude of the display control device 10 is the attitude of the display unit 15 out of components of the display control device 10.

In the first embodiment, a case in which the attitude information acquisition module 101 acquires tilt information about the tilt of the display control device 10 as the attitude information is taken as an example. The tilt of the display control device 10 is a difference between an axis (for example, a vertical direction or a horizontal direction) or a plane (for example, a vertical plane or a horizontal plane) used as a reference in space and an axis (for example, a longer direction or a shorter direction) or a plane (for example, a surface of the display unit 15) that serves as a reference in the display control device 10. For example, the tilt of the display control device 10 is an angle formed by those.

The attitude information acquisition module 101 may acquire direction information about the direction of the display control device 10 as the attitude information. The direction of the display control device 10 is a direction in which a surface of the display control device 10 faces (for example, a direction of a perpendicular with any point on the surface set as a foot of the perpendicular). For example, a direction of a perpendicular with any point on a surface of the display unit 15 (for example, a center point of the display unit 15) set as a foot of the perpendicular is the direction of the display control device 10. The attitude information acquisition module 101 may acquire both of the tilt information and the direction information as the attitude information.

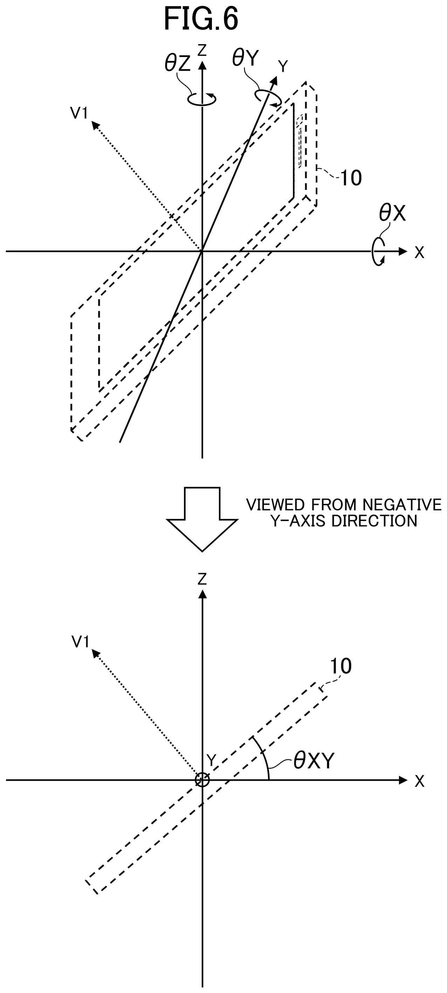

FIG. 6 is a diagram for illustrating an example of the attitude information. In the first embodiment, a case in which the attitude information is expressed by Euler angles is taken as an example. The Euler angles are angles indicating the tilt of the display control device 10. For example, the attitude information indicates a roll angle θX (a rotation angle about an X-axis), a pitch angle θY (a rotation angle about a Y-axis), and a yaw angle θZ (a rotation angle about a Z-axis). The X-axis, the Y-axis, and the Z-axis are sometimes called "roll axis," "pitch axis," and "yaw axis," respectively. For example, in the case in which the attitude information is expressed by the Euler angles, the tilt information is expressed by the roll angle θX and the pitch angle θY. The direction information is expressed by the yaw angle θZ.

A method of acquiring the attitude information may be a publicly-known method. The attitude information acquisition module 101 may acquire the attitude information based on a publicly-known algorithm. In the case in which the tilt information is acquired as the attitude information, a method of acquiring the tilt information may be a publicly-known method. The attitude information acquisition module 101 may acquire the tilt information based on a publicly-known algorithm. For example, the attitude information acquisition module 101 acquires the attitude information based on a detection signal of the sensor unit 16. The attitude information acquisition module 101 may calculate a gravity vector of the display control device 10 based on the acceleration sensor included in the sensor unit 16 to acquire the attitude information based on the gravity vector. The attitude information acquisition module 101 may calculate an angular velocity of the display control device 10 based on the gyroscope sensor included in the sensor unit 16 to acquire the attitude information based on the angular velocity. The attitude information acquisition module 101 may acquire the attitude information by integrating pieces of information that are acquired from a plurality of sensors included in the sensor unit 16.

For example, the attitude information acquisition module 101 may acquire pieces of attitude information by acquiring a piece of attitude information at each of a plurality of points in time. The attitude information acquisition module 101 acquires the latest attitude information each time a predetermined time interval elapses, based on the latest detection signal of the sensor unit 16. In other words, the attitude information acquisition module 101 regularly acquires the latest attitude information. The attitude information acquisition module 101 may record a history of the attitude information in the data storage unit 100. The attitude information acquisition module 101 may acquire the latest attitude information irregularly instead of regularly. It is sufficient for the attitude information acquisition module 101 to acquire the attitude information at least when the code screen SC is displayed. The attitude information acquisition module 101 may acquire the attitude information when the code screen SC is not displayed.

The attitude information is not required to indicate all of the roll angle θX, the pitch angle θY, and the yaw angle θZ, and may indicate only one or two out of the roll angle θX, the pitch angle θY, and the yaw angle θZ. For example, in the case of acquiring the tilt information alone as the attitude information, the attitude information acquisition module 101 may be designed so as to calculate only the roll angle θX and the pitch angle θY and omit calculation of the yaw angle θZ. In the case of acquiring the direction information alone as the attitude information without acquiring the tilt information as the attitude information, the attitude information acquisition module 101 may be designed so as to calculate only the yaw angle θZ and omit calculation of at least one of the roll angle θX or the pitch angle θY.

The attitude information may be publicly-known information. The attitude information is not limited to the Euler angles. For example, the attitude information may be expressed by a quaternion that expresses the attitude by four real numbers, a rotation matrix that expresses the attitude by a 3×3 matrix, axis-angle representation in which a rotation angle is expressed by a unit vector in a three-dimensional space, a direction cosine matrix that expresses rotation of a coordinate system in a three-dimensional space, a directivity angle that expresses the attitude by an angle between two vectors, or other formats. The attitude information acquisition module 101 may acquire the attitude information by an acquisition method suitable for a format used as the attitude information.

### [Display Control Module]

The display control module 102 displays the code screen SC including the code C on the display unit 15 of the display control device 10. For example, when the payment application is started, the display control device 10 holds communication to and from the server 30 to acquire information (for example, a code ID) required to display the code C. The information required to display the code C is information to be encoded. The display control module 102 generates the code C based on the information required to display the code C. In a case in which the information required to display the code C is stored in the data storage unit 100 in advance, the display control module 102 generates the code C without the display control device 10 holding communication to and from the server 30 for that particular purpose.

A method laid down by a publicly-known standard may be used to generate the code C. The code C may be of a publicly-known type. For example, the display control module 102 executes a series of processing procedures required to display the code screen SC by executing the payment application. The series of processing procedures is indicated by a program code of the payment application. In the case in which a program other than the payment application is used, the series of processing procedures is indicated by a program code of the other program.

In the first embodiment, the display control module 102 changes display of the code screen SC based on the attitude information. The display control module 102 changing display of the code screen SC means that the display control module 102 changes display of at least a part of the code screen SC. In other words, the display control module 102 executing control for changing contents visually recognizable to the human corresponds to the display control module 102 changing display of the code screen SC.

For example, changing a component of the code screen SC in terms of size, brightness, color, pattern, effect such as blinking, display position, direction, or image type, or a combination of those corresponds to changing display. A component of the code screen SC is an object displayed on the code screen SC. A component of the code screen SC may be, for example, the code C, an image other than the code C, text, one of parts of a user interface, or other elements. As in a modification example described later, changing the brightness of the code screen SC itself corresponds to changing display.

In the first embodiment, a case in which the display control module 102 changes display of the code screen SC by changing the size of the code C on the code screen SC is taken as an example. However, the display control module 102 may change the brightness of the code screen SC, the color of the code C, a background color of the code screen SC, a pattern of the code screen SC, an effect of the code C, the direction of the code C, or the type of the code C, or a combination of those, to thereby change display of the code screen SC.

For example, the display control module 102 determines whether an attitude indicated by the attitude information is a predetermined attitude, and changes display of the code screen SC based on a result of the determination. The predetermined attitude is an attitude used as a reference for whether to change display of the code screen SC. The display control module 102 keeps display of the code screen SC unchanged when it is determined that the attitude indicated by the attitude information is other than the predetermined attitude, and changes display of the code screen SC when it is determined that the attitude indicated by the attitude information is the predetermined attitude. In other words, the display control module 102 changes display of the code screen SC with a determination that the attitude indicated by the attitude information is the predetermined attitude as a condition (trigger) .

For example, when the attitude information indicates a first attitude, the display control module 102 displays the code screen SC by a first display method. The display control module 102 determines whether the display control device 10 has shifted from the first attitude to a second attitude based on the attitude information. When it is determined that the display control device 10 has shifted from the first attitude to the second attitude, the display control module 102 displays the code screen SC by a second display method. The display control module 102 may be designed so that the code screen SC is displayed by the first display method again when it is determined that the display control device 10 has returned from the second attitude to the first attitude.

What attitudes the first attitude and the second attitude are may be defined in the payment application, or may be defined in settings data referred to by the payment application. It is assumed that the settings data is stored in the data storage unit 100. The display control module 102 determines whether the display control device 10 is at the first attitude or the second attitude based on at least one of the payment application or the settings data. Similarly, what methods the first display method and the second display method are may be defined in the payment application, or may be defined in the settings data referred to by the payment application. It is sufficient for the display control module 102 to base control of the method of displaying the code screen SC on at least one of the payment application or the settings data.

In the examples of FIG. 3 and FIG. 4, the attitude in the upper illustration of FIG. 3 corresponds to the first attitude. The attitude in the lower illustration of FIG. 3 corresponds to the second attitude. For example, in the case in which the tilt information is acquired as the attitude information, the display control module 102 changes display of the code screen SC based on the tilt information. As illustrated in FIG. 6, the display control module 102 calculates an angle θXY formed by a horizontal plane (X-Y plane) and the longer direction of the display control device 10, based on the roll angle θX and the pitch angle θY which are indicated by the tilt information. The angle θXY is an example of the tilt. Accordingly, in descriptions of the angle θXY, "angle θXY" can be read as "tilt." Any tilt other than the angle θXY may be used as a tilt. The tilt may be expressed in a format other than angle (for example, as a vector or coordinates).

For example, when the angle θXY is positive, the display control module 102 determines that the display control device 10 is at the first attitude. When it is determined that the display control device 10 is at the first attitude, the display control module 102 displays, on the display unit 15, the code screen SC including the code C that has a first size as on the left-hand side of FIG. 4. When the angle θXY is negative, the display control module 102 determines that the display control device 10 is at the second attitude. When it is determined that the display control device 10 is at the second attitude, the display control module 102 displays, on the display unit 15, the code screen SC including the code C that has a second size larger than the first size as on the right-hand side of FIG. 4.

A threshold value for determination on the first attitude and the second attitude may be any value. Although the threshold value in the example given above is 0, the threshold value may be a positive value or a negative value. It is assumed that the threshold value is stored in the data storage unit 100. In a case in which the threshold value is -10 degrees, for example, the display control module 102 may determine that the display control device 10 is at the second attitude when the angle θXY of FIG. 6 is less than -10 degrees. It is assumed that the threshold value is stored in the data storage unit 100.

The display control module 102 may change the size of the code C by a publicly-known method. For example, the display control module 102 may change the size of the code C by executing image processing that stretches an image. In a case in which a parameter indicating the size of the code C is stored in the data storage unit 100, the display control module 102 may change the size of the code C by changing the parameter. It is assumed that by how much the display control module 102 increases the code C in size is indicated in the payment application or the settings data described above. In a case in which a plurality of codes that are each the code C but differ in size are prepared in advance as separate images, the display control module 102 may change the size of the code C by switching which code C is to be displayed. The display control module 102 may decrease the code C in size based on the attitude information, instead of increasing the code C in size.

### [1-3-2. Functions Implemented in Reading Device]

The reading device 20 includes, for example, a data storage unit 200 and a processing execution module 201. The data storage unit 200 is implemented by the storage unit 22. The processing execution module 201 is implemented by the control unit 21.

### [Data Storage Unit]

The data storage unit 200 stores data required to read the code C. For example, the data storage unit 200 stores a store application, which is a program for a store that is a member of the payment service. The store application causes the reading device 20 to function as the processing execution module 201. In a case in which the store uses the payment service from a program other than the store application, such as a browser, the data storage unit 200 stores the other program. The other program causes the reading device 20 to function as the processing execution module 201.

### [Processing Execution Module]

The processing execution module 201 executes predetermined processing when the code C is read. The predetermined processing is processing executed based on information that is extracted from the code C. In the first embodiment, the case in which the display control system 1 is used in the payment service is taken as an example, and the predetermined processing is accordingly processing for payment. For example, the processing execution module 201 extracts the code ID from the code C and transmits a payment request including the code ID to the server 30, to thereby execute the predetermined processing. The payment request is a request for payment. The payment request may be the same as data in a format employed in a publicly-known payment service. For example, the payment request may include a payment amount, an ID of the store, or other pieces of information.

The predetermined processing is not limited to processing for payment. It is sufficient for the predetermined processing to be processing suitable for a service in which the display control system 1 is used. For example, in a case in which the display control system 1 is used in an electronic ticket service, the processing execution module 201 acquires an electronic ticket ID that gives the user admission to a facility with an electronic ticket from the code C. The processing execution module 201 may execute the predetermined processing by transmitting an authentication request including the electronic ticket ID to the server 30. The authentication request is a request for checking validity of the electronic ticket ID. The processing execution module 201 receives information indicating a result of authentication of the electronic ticket ID from the server 30, and displays the result of the authentication on the display unit 25.

In a case in which the display control system 1 is used in a coupon delivery service, for example, the processing execution module 201 acquires a coupon ID of a coupon owned by the user from the code C. The processing execution module 201 may execute the predetermined processing by transmitting a redemption request including the coupon ID to the server 30. The redemption request is a request for redeeming the coupon. The processing execution module 201 receives information indicating that redeeming of the coupon is permitted from the server 30, and applies the coupon to an article or a service to be paid by the user. It suffices that, in a case in which the display control system 1 is used in another service, the processing execution module 201 executes predetermined processing suitable for the another service.

### [1-3-3. Functions Implemented in Server]

The server 30 includes, for example, a data storage unit 300 and a processing execution module 301. The data storage unit 300 is implemented by the storage unit 32. The processing execution module 301 is implemented by the control unit 31.

### [Data Storage Unit]

The data storage unit 300 stores data required for predetermined processing. For example, the data storage unit 300 stores a user database which stores various types of information about a user who uses the payment service. The user database stores, for example, a user ID, a password, a code ID, payment means information about payment means used by the user in the payment service, and use history information about a history of use of the payment service by the user. The server 30 issues a code ID based on a predetermined issuance rule, so as to avoid overlapping with another code ID. It suffices that, in a case in which processing other than payment is executed as the predetermined processing, the data storage unit 300 stores data required for the other processing. For example, the data storage unit 300 may store data of an electronic ticket or of a coupon.

### [Processing Execution Module]

The processing execution module 301 executes predetermined processing when the code C is read. The processing executed by the processing execution module 301 is different from the predetermined processing executed by the processing execution module 201 being processing on the reading device 20 side in the point that the processing is on the server 30 side, but the rest may be the same as the already described processing of the processing execution module 201. For example, when the payment request is received from the reading device 20, the processing execution module 301 executes the predetermined processing by executing payment based on the code ID or other types of information included in the payment request. The processing execution module 301 may execute, as the predetermined processing, authentication in an electronic ticket service, giving permission to redeem a coupon in a coupon delivery service, or other types of processing. It is sufficient for the processing execution module 301 to execute, as the predetermined processing, processing suitable for a service in which the display control system 1 is used.

### [1-4. Processing Executed in First Embodiment]

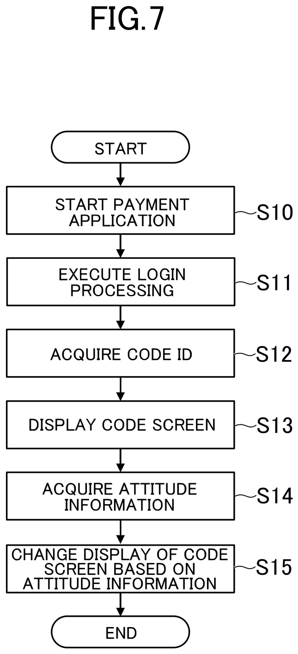

FIG. 7 is a diagram for illustrating an example of processing executed in the first embodiment. In FIG. 7, processing of the display control device 10 out of processing procedures executed in the display control system 1 is illustrated. The processing of FIG. 7 is executed by executing, by the control unit 11, a program (for example, the payment application) stored in the storage unit 12. Steps of FIG. 7 are an example of steps included in the display control method according to the present disclosure.

As in FIG. 7, the display control device 10 starts the payment application when the user selects the payment application (Step S10). The display control device 10 holds communication to and from the server 30 to execute the login processing (Step S11). When the login processing succeeds, the display control device 10 acquires the code ID from the server 30 (Step S12). The display control device 10 generates the code C based on the code ID acquired in Step S12, and displays the code screen SC on the display unit 15 (Step S13).

The display control device 10 acquires the attitude information based on the detection signal of the sensor unit 16 (Step S14). Details of the processing step of Step S14 are as described as contents of the processing of the attitude information acquisition module 101. The display control module 102 changes display of the code screen SC based on the attitude information (Step S15), at which point this processing ends. Details of the processing step of Step S15 are as described as contents of the processing of the display control module 102.

### [1-5. Summary of First Embodiment]

The display control device 10 of the first embodiment acquires the attitude information when the code screen SC is displayed on the display unit 15. The display control device 10 changes display of the code screen SC based on the attitude information. This enables the display control device 10 to display the code screen SC that changes flexibly in accordance with the attitude information on the display unit 15, and user convenience can thus be enhanced. For example, at an attitude at which the display control device 10 is not required to prepare for reading of the code C, the display control device 10 can give priority to visibility for the user instead of displaying the code C in that large a size. At an attitude at which the display control device 10 is required to prepare for reading of the code C, taking long to read the code C can be prevented by increasing the code C in size so that the code C is easy to read. No special operation (for example, tapping on the code screen SC) for changing display of the code screen SC is required of the user, and the display control device 10 can thus lessen a burden of operation on the user.

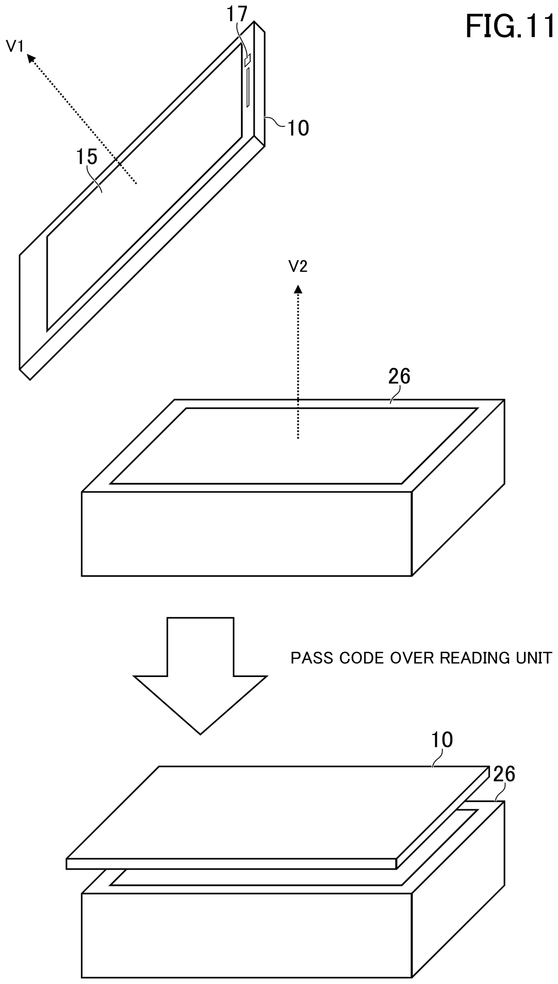

The display control device 10 acquires the tilt information about the tilt of the display control device 10 as the attitude information. The display control device 10 changes display of the code screen SC based on the tilt information. This enables the display control device 10 to display the code screen SC that changes flexibly in accordance with the tilt information on the display unit 15, and user convenience can thus be enhanced. For example, in a case of a tilt at which the display control device 10 is not required to prepare for reading of the code C (for example, a tilt in the upper illustration of FIG. 3), the display control device 10 can give priority to visibility for the user instead of displaying the code C in that large a size. In a case of a tilt at which the display control device 10 is required to prepare for reading of the code C (for example, a tilt in the lower illustration of FIG. 3), taking long to read the code C can be prevented by increasing the code C in size so that the code C is easy to read. For example, when the user presents the code C as in FIG. 3, the display control device 10 achieves changing display of the code screen SC at the moment at which the code C is about to be read, by changing display of the code screen SC based on an angle (for example, 30 degrees from a horizontal direction) by which a head of the display control device 10 (an upper part of the code screen SC) is lower, and user convenience can accordingly be enhanced. In a case in which the user passes the code C over the reading unit 26 as in FIG. 11 described later by changing the attitude of the display control device 10 to an attitude suitable for an angle (for example, a horizontal direction or a vertical direction) of the reading unit 26, the display control device 10 achieves changing display of the code screen SC at the moment at which the code C is about to be read, by changing display of the code screen SC based on the changed-to attitude, and user convenience can accordingly be enhanced.

The display control device 10 changes display of the code screen SC by changing the size of the code C on the code screen SC. This enables the display control device 10 to display the code C in a size that changes flexibly in accordance with the attitude information. For example, at an attitude at which it is not required to prepare for reading of the code C, it is possible to give priority to visibility for the user instead of displaying the code C in that large a size. At an attitude at which the display control device 10 is required to prepare for reading of the code C, taking long to read the code C can be prevented by increasing the code C in size so that the code C is easy to read. No special operation (for example, tapping on the code screen SC) for changing the size of the code C is required of the user, and the display control device 10 can thus lessen a burden of operation on the user.

### [2. Second Embodiment]

Next, a second embodiment of the present disclosure, which is an embodiment separate from the first embodiment, is described. In the second embodiment, descriptions on points that are the same as in the first embodiment are omitted. For example, the display control system 1 may have the same hardware configuration as in the first embodiment.

In the second embodiment, the sensor unit 16 includes a sensor capable of detecting light. For example, the sensor unit 16 includes at least one of an ambient light sensor or another light sensor (for example, a photodiode or a phototransistor) other than an ambient light sensor. The sensor unit 16 may be a light sensor capable of detecting presence or absence of light having a brightness equal to or more than a brightness of certain light, instead of a light sensor capable of detecting the brightness of light. The sensor unit 16 in the second embodiment may be designed so as not to include the sensor described in the first embodiment which is a sensor for detection of the attitude (for example, an acceleration sensor or a gyroscope sensor).

### [2-1. Outline of Second Embodiment]

In the second embodiment, a case in which the display control system 1 is used in a payment service is taken as an example as in the first embodiment. When the code C is read with the reading unit 26 as in the lower illustration of FIG. 3, for example, a shadow of the reading unit 26 may darken an area around the user's hand. There is also a case in which a store visited by the user is dark in the first place. There is also a case in which, depending on the time of day or weather conditions, the store is darker than normal. The brightness of surroundings of the display control device 10 thus varies depending on an environment in which the code C is read. When light being cast on the display control device 10 is dim (for example, when the surroundings of the display control device 10 are dark), reading of the code C may fail.

The display control device 10 of the second embodiment accordingly changes display of the code screen SC in accordance with light being cast on the display control device 10 so that possibility of failure decreases in reading of the code C, to thereby enhance user convenience. The following is description on details of the display control system 1 in the second embodiment.

### [2-2. Functions Implemented in Second Embodiment]

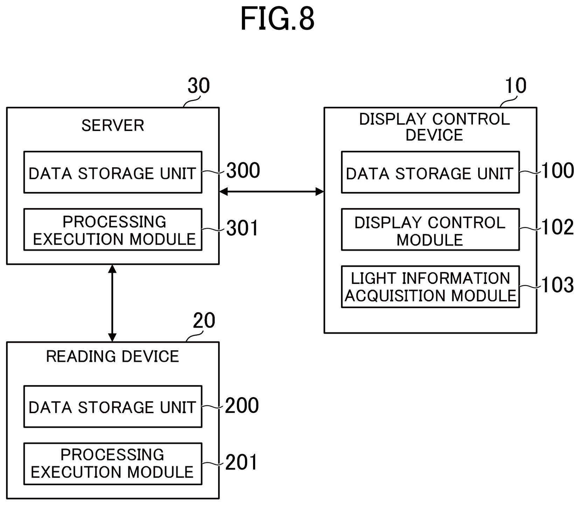

FIG. 8 is a diagram for illustrating an example of functions implemented in the second embodiment. In the second embodiment, functions of the reading device 20 and the server 30 are the same as in the first embodiment. Some of functions of the display control device 10 are the same as in the first embodiment. In the second embodiment, out of functions of the display control device 10, functions different from the ones in the first embodiment are described. For example, the display control device 10 includes the data storage unit 100, the display control module 102, and a light information acquisition module 103. The data storage unit 100 may be the same as in the first embodiment.

In the second embodiment, the display control device 10 may be designed so as not to include the attitude information acquisition module 101 and at least some of the functions of the display control module 102 described in the first embodiment. The display control module 102 in the second embodiment may be designed so as not to include the function of changing display of the code screen SC based on the attitude information. The display control device 10 may be designed so as not to acquire the attitude information to begin with. A mode in which the display control device 10 does not include the function of changing display of the code screen SC based on the attitude information is also within a scope of the present disclosure. The display control device 10 of the second embodiment may be a device that does not change its attitude in principle. For example, the display control device 10 may be a device fixed in attitude.

### [Light Information Acquisition Module]

The light information acquisition module 103 acquires light information about light being cast on the display control device 10 when the code screen SC is displayed on the display unit 15. Light being cast on the display control device 10 is light in the surroundings of the display control device 10. Light being cast on the display control device 10 may include not only light directly cast on the display control device 10 but also reflected light that has been reflected by another object such as a wall. Light being cast on the display control device 10 may include not only natural light but also light output from a light source. For example, light being cast on the display control device 10 may be light in an environment surrounding the display control device 10. The light information acquisition module 103 may acquire the light information before the code screen SC is displayed on the display unit 15.

In the second embodiment, a case in which the light information indicates the degree of brightness of light is taken as an example. The degree of brightness of light can be said to be "intensity of light." The degree of brightness of light is also referred to as "luminance," "light intensity," or "luminosity" in some places. A unit indicating the degree of brightness of light may be a publicly-known unit. For example, the degree of brightness of light may be expressed in lux, candela, nit, or other units. The degree of brightness of light may be expressed in unique units such as "dark, normal, bright" instead of general units. In the second embodiment, a case in which the degree of brightness of light is indicated by a numerical value is taken as an example. However, the degree of brightness of light may be indicated in other formats such as letters or symbols.

The light information may simply indicate whether light is brighter than a reference, instead of the degree of brightness of light. That is, the light information may be binary information indicating whether light is brighter than a reference, instead of information capable of expressing the degree of brightness of light in three or more levels. In the case in which the light information is binary, it can also be said that the light information is information indicating whether light brighter than a reference has been detected. For example, the light information acquisition module 103 acquires the light information based on a detection signal of the sensor unit 16. In the case in which the sensor unit 16 includes an ambient light sensor, the light information acquisition module 103 detects the degree of brightness of light in an environment surrounding the display control device 10 based on the ambient light sensor, and acquires the light information that indicates the detected degree of brightness of light.

For example, the light information acquisition module 103 may acquire pieces of light information by acquiring a piece of light information at each of a plurality of points in time. The light information acquisition module 103 acquires the latest light information each time a predetermined time interval elapses, based on the latest detection signal of the sensor unit 16. In other words, the light information acquisition module 103 regularly acquires the latest light information. The light information acquisition module 103 may record a history of the light information in the data storage unit 100. The light information acquisition module 103 may acquire the latest light information irregularly instead of regularly. It is sufficient for the light information acquisition module 103 to acquire the light information at least when the code screen SC is displayed. The light information acquisition module 103 may acquire the light information when the code screen SC is not displayed.

### [Display Control Module]

The display control module 102 changes display of the code screen SC based on the light information. In the second embodiment, as in the first embodiment, a case in which the display control module 102 changes display of the code screen SC by changing the size of the code C on the code screen SC is taken as an example. Also in the second embodiment, as in the first embodiment, the display control module 102 may change the brightness of the code screen SC, the color of the code C, a background color of the code screen SC, a pattern of the code screen SC, an effect of the code C, the direction of the code C, or the type of the code C, or a combination of those, to thereby change display of the code screen SC.

For example, the display control module 102 determines whether light indicated by the light information is predetermined light, and changes display of the code screen SC based on a result of the determination. The predetermined light is light used as a reference for whether to change display of the code screen SC. The display control module 102 keeps display of the code screen SC unchanged when it is determined that the light indicated by the light information is other than the predetermined light, and changes display of the code screen SC when it is determined that the light indicated by the light information is the predetermined light. In other words, the display control module 102 changes display of the code screen SC with a determination that the light indicated by the light information is the predetermined light as a condition (trigger).

For example, when the light information indicates first light, the display control module 102 displays the code screen SC by a first display method. The display control module 102 determines whether the light being cast on the display control device 10 has shifted from the first light to second light based on the light information. When it is determined that the light being cast on the display control device 10 has shifted from the first light to the second light, the display control module 102 displays the code screen SC by a second display method. The display control module 102 may be designed so that the code screen SC is displayed by the first display method again when it is determined that the light being cast on the display control device 10 has returned from the second light to the first light.

What light the first light and the second light are may be defined in the payment application, or may be defined in settings data referred to by the payment application. It is assumed that the settings data is stored in the data storage unit 100. The display control module 102 determines whether the light being cast on the display control device 10 is the first light or the second light based on at least one of the payment application or the settings data. Similarly, what methods the first display method and the second display method are may be defined in the payment application, or may be defined in the settings data referred to by the payment application. It is sufficient for the display control module 102 to base control of the method of displaying the code screen SC on at least one of the payment application or the settings data.

In the examples of FIG. 3 and FIG. 4, light input to the display control device 10 under a state of the upper illustration of FIG. 3 corresponds to the first light. Light input to the display control device 10 under a state of the lower illustration of FIG. 3 corresponds to the second light. For example, the display control module 102 detects a change of light based on the pieces of light information at the plurality of points in time, and changes display of the code screen SC based on the change of light. As the change of light, the display control module 102 detects a change in which light turns dim, and changes display of the code screen SC based on the change in which light turns dim. When a shift from the state of the upper illustration of FIG. 3 to the state of the lower illustration of FIG. 3 occurs, light indicated by the light information may be dimmed by a shadow of the reading unit 26. When detecting such a change of light, the display control module 102 changes display of the code screen SC. In the example of FIG. 4, when the light information indicates the first light, the display control module 102 displays the code screen SC including the code C that has a first size on the display unit 15 as on the left-hand side of FIG. 4. When the light information indicates the second light, the display control module 102 displays the code screen SC including the code C that has a second size larger than the first size on the display unit 15 as on the right-hand side of FIG. 4.

For example, the display control module 102 calculates an amount of change in the degree of brightness of light based on the pieces of light information at the plurality of points in time, and determines whether the amount of change is equal to or more than a threshold value. The display control module 102 does not change display of the code screen SC when it is determined that the amount of change is less than the threshold value, and changes display of the code screen SC when it is determined that the amount of change is equal to or more than the threshold value. In the example of FIG. 3, the amount of change is an amount of decrease in the degree of brightness of light. In a case in which the degree of brightness of light is expressed in lux, the display control module 102 does not change display of the code screen SC when it is determined that the amount of decrease in lux is less than a threshold value, and changes display of the code screen SC when it is determined that the amount of decrease in lux is equal to or more than the threshold value. In the example of FIG. 4, when it is determined that the amount of decrease in lux is less than the threshold value, the display control module 102 does not change the size of the code C and keeps the code C at a first size as on the left-hand side of FIG. 4. When it is determined that the amount of decrease in lux is equal to or more than the threshold value, the display control module 102 changes the size of the code C to a second size larger than the first size as on the right-hand side of FIG. 4. The amount of change may mean an amount of increase in the degree of brightness of light.

The display control module 102 may determine, based on a piece of light information at one point in time, whether the brightness of light at that point in time is equal to or more than a threshold value, instead of the amount of change in the degree of brightness of light. The display control module 102 may be designed so as not to change display of the code screen SC when it is determined that the brightness of light at one point in time is equal to or more than a threshold value, and so as to change display of the code screen SC when it is determined that the brightness of light at one point in time is less than the threshold value. In the case in which the light information is binary information indicating whether light has been detected, instead of the degree of brightness of light, the display control module 102 may determine whether light has been detected based on the light information in a single dimension. The display control module 102 may be designed so as not to change display of the code screen SC when it is determined that light has been detected, and so as to change display of the code screen SC when it is determined that light has ceased to be detected. The display control module 102 may change display of the code screen SC when a shift from a state in which it is determined that light has been detected to a state in which it is determined that light has ceased to be detected occurs.

### [2-3. Processing Executed in Second Embodiment]

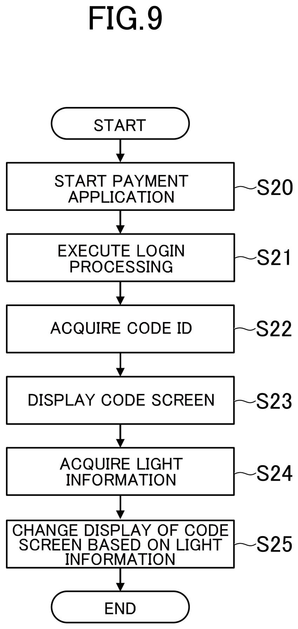

FIG. 9 is a diagram for illustrating an example of processing executed in the second embodiment. In FIG. 9, processing of the display control device 10 out of processing procedures executed in the display control system 1 is illustrated. The processing of FIG. 9 is executed by executing, by the control unit 11, a program (for example, the payment application) stored in the storage unit 12. Steps of FIG. 9 are an example of steps included in the display control method according to the present disclosure.

As in FIG. 9, Step S20 to Step S23 are the same as Step S10 to Step S13, respectively. The display control device 10 acquires the light information based on the detection signal of the sensor unit 16 (Step S24). Details of the processing step of Step S24 are as described as contents of the processing of the light information acquisition module 103. The display control module 102 changes display of the code screen SC based on the light information (Step S25), at which point this processing ends. Details of the processing step of Step S25 are as described as contents of the processing of the display control module 102.

### [2-4. Summary of Second Embodiment]

The display control device 10 of the second embodiment acquires the light information when the code screen SC is displayed on the display unit 15. The display control device 10 changes display of the code screen SC based on the light information. This enables the display control device 10 to display the code screen SC that changes flexibly in accordance with the light information on the display unit 15, and user convenience can thus be enhanced. For example, when light is such that the display control device 10 is not required to prepare for reading of the code C, the display control device 10 can give priority to visibility for the user instead of displaying the code C in that large a size. In a case in which the user passes the code C over the reading unit 26 as in FIG. 3, the shadow of the reading unit 26 darkens an area around the user's hand, and accordingly, when light is such that the display control device 10 is required to prepare for reading of the code C, taking long to read the code C can be prevented by increasing the code C in size so that the code C is easy to read. No special operation (for example, tapping on the code screen SC) for changing display of the code screen SC is required of the user, and the display control device 10 can thus lessen a burden of operation on the user.

The display control device 10 acquires pieces of light information by acquiring a piece of light information at each of a plurality of points in time. The display control device 10 detects a change of light based on the pieces of light information at the plurality of points in time, and changes display of the code screen SC based on the change of light. This enables the display control device 10 to display the code screen SC that changes flexibly in accordance with the change of light on the display unit 15, and user convenience can thus be enhanced. For example, when the change of light is such that the display control device 10 is not required to prepare for reading of the code C, the display control device 10 can give priority to visibility for the user instead of displaying the code C in that large a size. When the change of light is such that the display control device 10 is required to prepare for reading of the code C, taking long to read the code C can be prevented by increasing the code C in size so that the code C is easy to read.

As the change of light, the display control device 10 detects a change in which light turns dim, and changes display of the code screen SC based on the change in which light turns dim. This enables the display control device 10 to display the code screen SC that changes flexibly in response to dimming of light on the display unit 15, and user convenience can thus be enhanced. For example, the display control device 10 can prevent a situation in which reading of the code C takes long by increasing the code C in size so that the code C is easy to read despite dim light.

The display control device 10 changes display of the code screen SC by changing the size of the code C on the code screen SC. This enables the display control device 10 to display the code C in a size that changes flexibly in accordance with the light information. For example, when light is such that it is not required to prepare for reading of the code C, it is possible to give priority to visibility for the user instead of displaying the code C in that large a size. When light is such that the display control device 10 is required to prepare for reading of the code C, taking long to read the code C can be prevented by increasing the code C in size so that the code C is easy to read. No special operation (for example, tapping on the code screen SC) for changing the size of the code C is required of the user, and the display control device 10 can thus lessen a burden of operation on the user.

### [3. Third Embodiment]

Next, a third embodiment of the present disclosure, which is an embodiment separate from the first embodiment and the second embodiment, is described. In the third embodiment, descriptions on points that are the same as in at least one of the first embodiment or the second embodiment are omitted. For example, the display control system 1 may have the same hardware configuration as in at least one of the first embodiment or the second embodiment.

In the first embodiment, the case in which the display control module 102 changes display of the code screen SC based on the attitude information has been taken as an example. In the second embodiment, the case in which the display control module 102 changes display of the code screen SC based on the light information has been taken as an example. The third embodiment takes, as an example, a case in which the display control module 102 determines whether the code C is about to be read with the reading unit 26 based on a predetermined determination method, and changes display of the code screen SC based on a result of the determination.

The predetermined determination method is a method of determining whether the code C is about to be read with the reading unit 26. It may also be said that the predetermined determination method is a method of determining whether to change display of the code screen SC. The determination method described in the first embodiment which is based on the attitude information is an example of the predetermined determination method. The determination method described in the second embodiment which is based on the light information is another example of the predetermined determination method. The predetermined determination method may be a determination method other than the determination method described in the first embodiment and the determination method described in the second embodiment.

For example, the predetermined determination method may be a determination method based on a photographed image generated by the photographing unit 17. When the code screen SC is displayed, the display control device 10 acquires a photographed image generated by the front-facing camera of the photographing unit 17. The display control module 102 performs image analysis on the photographed image to determine whether the reading unit 26 has approached. Approach of the reading unit 26 may be determined based on a publicly-known object detection algorithm. The object detection algorithm may be, for example, a template matching method, an edge detection method, a method utilizing a model of machine learning, or other methods.

For example, in a case of using the template matching method, the data storage unit 100 stores a template image in which the reading unit 26 is shown as a template. The display control module 102 determines whether the reading unit 26 is shown in the photographed image based on the template image and the publicly-known algorithm in the template matching method, to thereby determine whether the code C is about to be read with the reading unit 26. That the reading unit 26 is shown in the photographed image corresponds to the code C being about to be read with the reading unit 26. That the reading unit 26 is not shown in the photographed image corresponds to the code C not being about to be read with the reading unit 26. In a case of using an object detection algorithm other than the template matching method, it suffices that the display control module 102 makes determination based on the other object detection algorithm.

The display control module 102 may determine whether some object which is not limited to the reading unit 26 has approached the code screen SC based on the photographed image. Some object approaching the code screen SC can be paraphrased as some object approaching the code C, the front-facing camera of the photographing unit 17, or the display control device 10. It is sufficient for the display control module 102 to determine that some object corresponding to a foreground has approached the code screen SC from the photographed image, instead of from an object detection algorithm for detecting a particular object. That some object approaches the code screen SC corresponds to the code C being about to be read with the reading unit 26. That no object approaches the code screen SC corresponds to the code C not being about to be read with the reading unit 26.

For example, in a case in which the sensor unit 16 includes an object detection sensor or a proximity sensor, the predetermined determination method may be a determination method based on the object detection sensor or the proximity sensor of the sensor unit 16. The object detection sensor or the proximity sensor may be a publicly-known sensor. The display control device 10 acquires object information about a result of detection of an object based on the detection signal of the object detection sensor or the proximity sensor of the sensor unit 16. The object information indicates a detection result of the object detection sensor or the proximity sensor of the sensor unit 16. The display control module 102 may determine whether the code C is about to be read with the reading unit 26 based on the object information. That the object information indicates detection of an object or proximity of an object corresponds to the code C being about to be read with the reading unit 26. That the object information indicates detection of no object or proximity of no object corresponds to the code C not being about to be read with the reading unit 26.

The predetermined determination method is not limited to the examples given above. For example, determining whether the user has checked in to a store, determining whether the display control device 10 has detected a beacon emitted by the reading device 20, a method using a depth from an object that is detected with a depth sensor included in the sensor unit 16, or other determination methods may correspond to the predetermined determination method. The display control module 102 may make determination by those other determination methods.

The display control module 102 in the third embodiment does not change display of the code screen SC when it is determined that the code C is not about to be read with the reading unit 26, and changes display of the code screen SC when it is determined that the code C is about to be read with the reading unit 26. That is, the display control module 102 changes display of the code screen SC with a fact that the code C being about to be read with the reading unit 26 as a condition (trigger). Processing for changing display of the code screen SC may be the same as in at least one of the first embodiment or the second embodiment.

The display control device 10 of the third embodiment determines whether the code C is about to be read with the reading unit 26 based on the predetermined determination method, and changes display of the code screen SC based on a result of the determination. This gives the display control device 10 the same effects as the effects described in at least one of the summary of the first embodiment or the summary of the second embodiment. For example, even when the attitude and light are not detected, the same effects as the effects described in at least one of the summary of the first embodiment or the summary of the second embodiment can be obtained by another determination method as long as the display control device 10 has a function capable of implementing the another determination method.

### [4. Modification Examples]

The present disclosure is not limited to the first embodiment, the second embodiment, and the third embodiment described above. The present disclosure is suitably modifiable without departing from the spirit of the present disclosure. The following are descriptions on modification examples of the first embodiment, modification examples of the second embodiment, and modification examples of the third embodiment.

### [4-1. Modification Examples of First Embodiment]

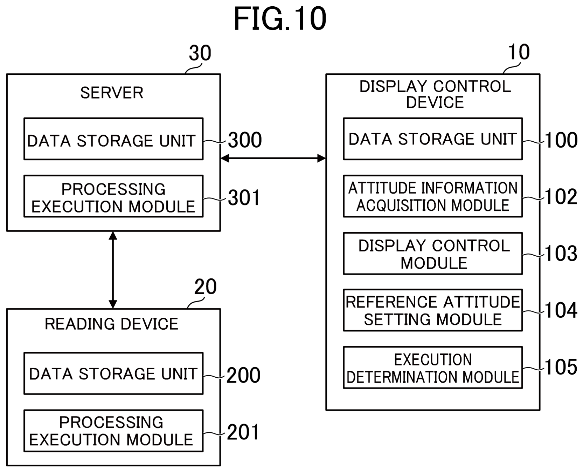

FIG. 10 is a diagram for illustrating an example of functions implemented in the modification examples of the first embodiment. For example, in the display control device 10 of the modification examples of the first embodiment, a reference attitude setting module 104 and an execution determination module 105 are implemented. Each of the reference attitude setting module 104 and the execution determination module 105 is implemented by the control unit 11.

### [Modification Example 1-1]

For example, the attitude information acquisition module 101 may acquire, as the tilt information, tilt-and-extra information about the tilt of the display control device 10 and a direction V1 of the code screen SC. The tilt-and-extra information indicates not only the tilt of the display control device 10 but also the direction V1 of the code screen SC. The direction V1 of the code screen SC can be said as the direction V1 of the display control device 10 or the display unit 15. It can also be said that the direction V1 of the code screen SC is the direction V1 of a surface of a housing of the display control device 10 on which the display unit 15 is exposed.

In Modification Example 1-1, a case in which the tilt-and-extra information indicates the roll angle θX, the pitch angle θY, and the yaw angle θZ that are illustrated in FIG. 6 is taken as an example. Although the attitude information and the tilt information that are described in the first embodiment may indicate only some of those three angles instead of all, Modification Example 1-1 takes a case in which the tilt-and-extra information indicates all of those three angles as an example. The tilt-and-extra information may indicate the direction V1 but is not required to indicate the direction V1 because the direction V1 is calculable from those three angles. For example, the display control module 102 identifies the tilt of the display control device 10 based on the roll angle θX and the pitch angle θY out of the tilt-and-extra information, without basing the identification on the yaw angle θZ. In this regard, Modification Example 1-1 is as described in the first embodiment.

For example, in Modification Example 1-1, the display control module 102 identifies the direction V1 of the code screen SC based on the roll angle θX, the pitch angle θY, and the yaw angle θZ that are indicated by the tilt-and-extra information. In the example of FIG. 6, the display control module 102 identifies the direction of the perpendicular of the display unit 15 which displays the code screen SC as the direction V1 of the code screen SC, based on the tilt-and-extra information. It is sufficient for the display control module 102 to identify the direction V1 of the code screen SC based on at least the yaw angle θZ out of the tilt-and-extra information. For example, the display control module 102 may identify the direction V1 of the code screen SC without basing the identification on at least one of the roll angle θX or the pitch angle θY out of the tilt-and-extra information.

The tilt-and-extra information may be expressed by information other than the roll angle θX, the pitch angle θY, and the yaw angle θZ which are Euler angles. For example, the tilt-and-extra information may be expressed by one of the quaternion, the rotation matrix, the axis-angle representation, the direction cosine matrix, and the directivity angle that are described in the first embodiment, or in other formats. The tilt-and-extra information may be acquired by a publicly-known method. The attitude information acquisition module 101 may acquire the tilt-and-extra information based on a publicly-known algorithm.

FIG. 11 is a diagram for illustrating an example of a change of attitude of the display control device 10 that occurs in reading of the code C. In the first embodiment, a type of reading method in which the user presents the code C has been taken as an example. The type of reading method in which the user presents the code C is hereinafter referred to as "presentation type." Although the presentation type may be used to read the code C in Modification Example 1-1 as well, Modification Example 1-1 takes a reading method of another type as an example. As in FIG. 11, the user passes the code C over the reading unit 26 that is placed in a predetermined place (for example, on a table of the store). The type of reading method in which the user passes the code C over the reading unit 26 is hereinafter referred to as "pass-over type."

The reading unit 26 that is used in the pass-over-type reading method may be a publicly-known device. In the example of FIG. 11, the reading unit 26 includes at least one light source (for example, LED light source). The light source may be on all the time or may be designed so as to turn on only when a predetermined condition is satisfied. The predetermined condition can be any condition. For example, the predetermined condition may be execution of operation for checkout via the operation unit 24 of the reading device 20, detection of proximity of an object by the proximity sensor included in the reading unit 26, or other conditions.

For example, at least some of surfaces of the reading unit 26 are a surface for reading the code C. The surface is hereinafter referred to as "reading surface." The reading surface can be said as a surface of the reading unit 26 over which the user is to pass the code C. In the example of FIG. 11, the reading unit 26 is placed so that the reading surface of the reading unit 26 faces upward. The reading surface may be made from, for example, a transparent or translucent material (for example, glass or acrylic). The reading unit 26 reads the code C outside the reading unit 26 with a sensor (for example, a camera or a scanner) inside the reading unit 26 via the reading surface.

For example, the user changes the attitude of the display control device 10 so that the code screen SC faces toward the reading surface of the reading unit 26. The code screen SC facing toward the reading surface of the reading unit 26 is that an angle formed by the direction V1 of the code screen SC and a direction V2 of the reading surface of the reading unit 26 is 180 degrees or substantially 180 degrees. An angle that is substantially 180 degrees is an angle close to 180 degrees. For example, the angle that is substantially 180 degrees may be 150 degrees to 210 degrees. In the example of FIG. 11 in which the reading surface of the reading unit 26 faces upward, the user accordingly changes the attitude of the display control device 10 so that the code screen SC faces downward. In Modification Example 1-1, the user changing the tilt of the display control device 10 and the direction of the code screen SC corresponds to changing the attitude of the display control device 10.

The reading surface of the reading unit 26 may face any direction. The direction in which the reading surface of the reading unit 26 faces is not limited to the upward direction. For example, the reading surface of the reading unit 26 may face an obliquely upward direction, a horizontal direction, an obliquely downward direction, a downward direction, or other directions. In whichever direction the reading surface of the reading unit 26 faces, the user is just required to change the attitude of the display control device 10 so that the code screen SC faces toward the reading surface of the reading unit 26.

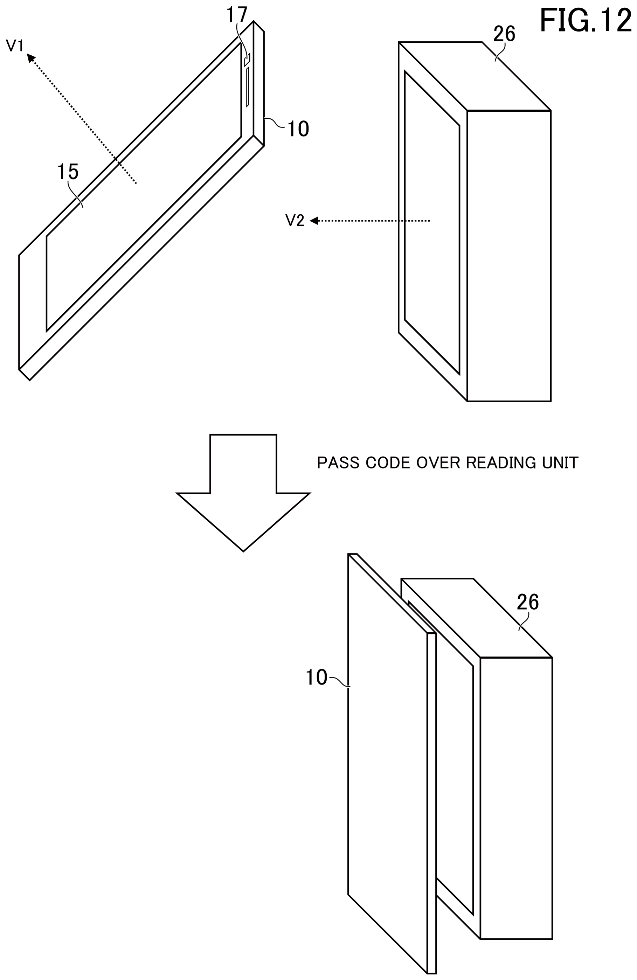

FIG. 12 is a diagram for illustrating an example of a change of attitude of the display control device 10 that occurs in reading of the code C. In the example of FIG. 12, the reading surface of the reading unit 26 faces a horizontal direction. In this case, the user changes the attitude of the display control device 10 so that the code screen SC faces a horizontal direction opposite from the horizontal direction that the reading surface of the reading unit 26 faces. This change of attitude of the display control device 10 enables the user to pass the code C over the reading unit 26.

The display control module 102 in Modification Example 1-1 changes display of the code screen SC based on the tilt-and-extra information. For example, in a case in which the tilt-and-extra information indicates a first tilt-and-direction, the display control module 102 displays the code screen SC by the first display method. The first tilt-and-direction is a tilt and a direction in which the code screen SC does not face toward the reading surface of the reading unit 26. In the example of FIG. 11, the first tilt-and-direction is a tilt and a direction in which the code screen SC does not face downward. In the example of FIG. 12, the first tilt-and-direction is a tilt and a direction in which the code screen SC does not face a horizontal direction.

For example, the display control module 102 determines whether the display control device 10 has changed from the first tilt-and-direction to a second tilt-and-direction, based on the tilt information. The second tilt-and-direction is a tilt and a direction in which the code screen SC faces toward the reading surface of the reading unit 26. In the example of FIG. 11, the second tilt-and-direction is a tilt and a direction in which the code screen SC faces downward. In the example of FIG. 12, the second tilt-and-direction is a tilt and a direction in which the code screen SC faces a horizontal direction.

For example, when it is determined that the display control device 10 has changed from the first tilt-and-direction to the second tilt-and-direction, the display control module 102 displays the code screen SC by the second display method. The display control module 102 may be designed so that the code screen SC is displayed by the first display method again when it is determined that the display control device 10 has returned from the second tilt-and-direction to the first tilt-and-direction.

Although the pass-over-type reading method is taken as an example in Modification Example 1-1, the display control module 102 may change display of the code screen SC based on the tilt-and-extra information also when the presentation-type reading method is used. In the example of FIG. 3, the display control module 102 may be designed so as to make determination about whether the code screen SC faces upward or an obliquely upward direction in addition to the tilt described in the first embodiment, and so as to change display of the code screen SC when it is determined that the code screen SC faces upward or an obliquely upward direction.

The display control device 10 of Modification Example 1-1 acquires, as the tilt information, the tilt-and-extra information about the tilt of the display control device 10 and the direction of the code screen SC. The display control device 10 changes display of the code screen SC based on the tilt-and-extra information. This enables the display control device 10 to display the code screen SC that changes flexibly in accordance with the tilt-and-extra information on the display unit 15, and user convenience can thus be enhanced. For example, in the case in which the code C is read by the pass-over-type reading method as in FIG. 11 and FIG. 12, the display control device 10 can determine whether the user is about to pass the code C over the reading unit 26 from the tilt-and-extra information.

### [Modification Example 1-2]

For example, the attitude information acquisition module 101 may acquire pieces of attitude information by acquiring a piece of attitude information at each of a plurality of points in time. In this regard, Modification Example 1-2 is as described in the first embodiment. The display control module 102 may detect a change of attitude of the display control device 10 based on the pieces of attitude information at the plurality of points in time to change display of the code screen SC based on the change of attitude of the display control device 10. For example, the display control module 102 detects, as a change of attitude, a difference between an attitude indicated by a piece of attitude information at a first point in time out of the plurality of points in time and an attitude indicated by a piece of attitude information at a second point in time out of the plurality of points in time.

The second point in time is a point in time out of the plurality of points in time that is not the first point in time. In Modification Example 1-2, a case in which the second point in time is a point in time later than the first point in time is taken as an example, but the second point in time may be a point in time that precedes the first point in time. A time gap between the first point in time and the second point in time may be any gap. For example, the second point in time may be a point in time out of the plurality of points in time that immediately follows the first point in time or a point in time later than the first point in time by two or more points. The attitude information acquisition module 101 may repeatedly detect a change of attitude of the display control device 10 based on the latest piece of attitude information.

For example, the display control module 102 determines whether a change of attitude of the display control device 10 is a predetermined change. The predetermined change is a change used as a reference for whether to change display of the code screen SC. For example, the predetermined change may be an amount of change of attitude reaching or exceeding a threshold value, a change from a first attitude to a second attitude, or other changes. In Modification Example 1-2, a case in which the amount of change of attitude reaching or exceeding a threshold value corresponds to the predetermined change is taken as an example. In the case in which the Euler angles are used as the attitude information as in the first embodiment, the display control module 102 may determine whether a change of attitude of the display control device 10 is the predetermined change by determining whether an amount of change of an Euler angle is equal to or more than a threshold value.

For example, the display control module 102 does not change display of the code screen SC when it is not determined that a change of attitude of the display control device 10 is the predetermined change, and changes display of the code screen SC when it is determined that a change of attitude of the display control device 10 is the predetermined change. That is, the display control module 102 changes display of the code screen SC with a determination that a change of attitude of the display control device 10 is the predetermined change as a condition (trigger). Display of the code screen SC may be changed by the same method as in the first embodiment. For example, the display control module 102 may change display of the code screen SC by increasing the code C in size as in FIG. 4.

In the example of FIG. 3, the attitude of the display control device 10 changing from the attitude of the upper illustration of FIG. 3 to the attitude of the lower illustration of FIG. 3 may correspond to the attitude of the display control device 10 undergoing the predetermined change. In the example of FIG. 11, changing from the attitude of the upper illustration of FIG. 11 to the attitude of the lower illustration of FIG. 11 may correspond to the attitude of the display control device 10 undergoing the predetermined change. In the example of FIG. 12, changing from the attitude of the upper illustration of FIG. 12 to the attitude of the lower illustration of FIG. 12 may correspond to the attitude of the display control device 10 undergoing the predetermined change. The display control module 102 may change display of the code screen SC when a change of attitude such as a change in at least one of FIG. 3, FIG. 11, or

FIG. 12 is detected.

The display control device 10 of Modification Example 1-2 acquires pieces of attitude information by acquiring a piece of attitude information at each of a plurality of points in time. The display control device 10 detects a change of attitude of the display control device 10 based on the pieces of attitude information at the plurality of points in time to change display of the code screen SC based on the change of attitude of the display control device 10. This enables the display control device 10 display the code screen SC that changes flexibly in accordance with a change of attitude of the display control device 10 on the display unit 15, and user convenience can thus be enhanced. For example, in the case in which the amount of change of attitude of the display control device 10 is equal to or more than a threshold value, it is deduced that the code C is about to be read, and the display control device 10 accordingly changes display of the code screen SC in such a case, to thereby be able to make the code C easy to read.

### [Modification Example 1-3]

For example, in Modification Example 1-2, the display control module 102 may detect rotation of the display control device 10 as a change of attitude of the display control device 10 and change display of the code screen SC based on the rotation of the display control device 10. Although the display control module 102 is capable of detecting rotation about any rotation axis, Modification Example 1-3 takes, as an example, a case of detecting rotation about a rotation axis in a direction other than the Z-axis direction of FIG. 6. The other direction is a direction different from the Z-axis direction. For example, the other direction may be a direction that forms an angle equal to or more than a threshold value (for example, 30 degrees) with the Z-axis.

For example, the display control module 102 determines whether rotation of the display control device 10 is predetermined rotation. The predetermined rotation is rotation used as a reference for whether to change display of the code screen SC. For example, the predetermined rotation may be rotation in a direction other than the Z-axis direction by an amount equal to or more than a threshold value, or other modes of rotation. Modification Example 1-3 takes, as an example, a case in which rotation in a direction other than the Z-axis direction by an amount equal to or more than a threshold value corresponds to the predetermined rotation. In the case in which the Euler angles are used as the attitude information as in the first embodiment, the display control module 102 detects the amount of rotation in a direction other than the Z-axis direction based on the roll angle θX and the pitch angle θY.

For example, the display control module 102 does not change display of the code screen SC when it is not determined that rotation of the display control device 10 is the predetermined rotation, and changes display of the code screen SC when it is determined that rotation of the display control device 10 is the predetermined rotation. That is, the display control module 102 changes display of the code screen SC with a determination that rotation of the display control device 10 is the predetermined rotation as a condition (trigger). Display of the code screen SC may be changed by the same method as in the first embodiment. For example, the display control module 102 may change display of the code screen SC by increasing the code C in size as in FIG. 4. The predetermined rotation may be rotation by an amount (measured as a rotation angle or a rotation angular velocity) equal to or more than a threshold value.

In the example of FIG. 3, the rotation of the display control device 10 from the state of the upper illustration of FIG. 3 to the state of the lower illustration of FIG. 3 may correspond to the rotation of the display control device 10 being the predetermined rotation. In the example of FIG. 11, the rotation of the display control device 10 from the state of the upper illustration of FIG. 11 to the state of the lower illustration of FIG. 11 may correspond to the rotation of the display control device 10 being the predetermined rotation. In the example of FIG. 12, the rotation of the display control device 10 from the state of the upper illustration of FIG. 12 to the state of the lower illustration of FIG. 12 may correspond to the rotation of the display control device 10 being the predetermined rotation. The display control module 102 may change display of the code screen SC when rotation as illustrated in at least one of FIG. 3, FIG. 11, or FIG. 12 is detected.

The display control device 10 of Modification Example 1-3 detects rotation of the display control device 10 as a change of attitude of the display control device 10, and changes display of the code screen SC based on the rotation of the display control device 10. This enables the display control device 10 to display the code screen SC that changes flexibly in accordance with rotation of the display control device 10 on the display unit 15, and user convenience can thus be enhanced. For example, in the case in which the amount of rotation of the display control device 10 is equal to or more than a threshold value, it is deduced that the code C is about to be read, and the display control device 10 accordingly changes display of the code screen SC in such a case, to thereby be able to make the code C easy to read.

### [Modification Example 1-4]

For example, in Modification Example 1-2, a change of attitude of the display control device 10 may be a change from a reference attitude which serves as a reference. The reference attitude is an attitude used as a criterion for determination. An attitude indicated by a piece of attitude information at the first point in time in Modification Example 1-2 is an example of the reference attitude. In Modification Example 1-3, rotation of the display control device 10 may be rotation from the reference attitude. In Modification Example 1-4, another example of the reference attitude is described.

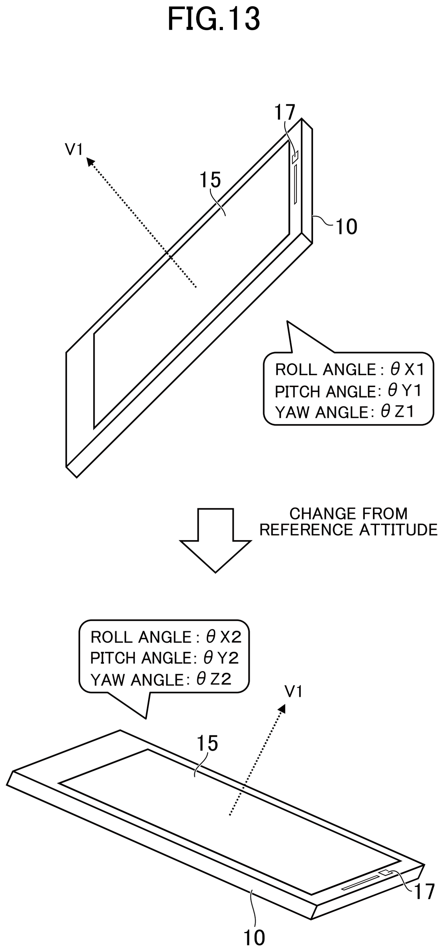

FIG. 13 is a diagram for illustrating an example of the reference attitude. In the example of FIG. 13, the reference attitude is expressed by a roll angle θX1, a pitch angle θY1, and a yaw angle θZ1 at one point in time. The display control device 10 of Modification Example 1-4 includes the reference attitude setting module 104. For example, the payment application causes the display control device 10 to further function as the reference attitude setting module 104. The reference attitude setting module 104 sets the reference attitude related to an attitude to be used as a reference. Reference attitude data indicating the reference attitude may be stored in advance in the data storage unit 100, but Modification Example 1-4 takes, as an example, a case in which the reference attitude setting module 104 dynamically sets the reference attitude in accordance with the situation of the display control device 10. The reference attitude setting module 104 sets the reference attitude by recording the reference attitude data in the data storage unit 100.

For example, the reference attitude setting module 104 sets, as the reference attitude, an attitude indicated by a piece of attitude information acquired at a predetermined point in time. The predetermined point in time is a point in time at which the reference attitude setting module 104 is to set the reference attitude. It is assumed that data indicating the predetermined point in time is stored in the data storage unit 100 in advance. The reference attitude setting module 104 determines whether the predetermined point in time has arrived based on the data. The reference attitude setting module 104 sets, as the reference attitude, an attitude indicated by a piece of attitude information that is acquired when it is determined that the predetermined point in time has arrived. The attitude information acquisition module 101 may start acquiring the attitude information continually before the predetermined point in time arrives, or may acquire the attitude information when it is determined that the predetermined point in time has arrived.

The predetermined point in time may be any point in time. For example, in a case in which a point in time at which the payment application is started corresponds to the predetermined point in time, the reference attitude setting module 104 sets, as the reference attitude, an attitude indicated by a piece of attitude information that is acquired when the payment application is started. In a case in which a point in time at which login processing for logging in to the payment service succeeds corresponds to the predetermined point in time, the reference attitude setting module 104 sets, as the reference attitude, an attitude indicated by a piece of attitude information that is acquired when the login processing succeeds. In a case in which a point in time at which the user performs predetermined operation corresponds to the predetermined point in time, the reference attitude setting module 104 sets, as the reference attitude, an attitude indicated by a piece of attitude information that is acquired when the user performs predetermined operation.

The display control module 102 in Modification Example 1-4 detects a change of attitude from the reference attitude, and changes display of the code screen SC based on the change of attitude from the reference attitude. For example, the display control module 102 detects a difference between the reference attitude and an attitude indicated by the latest piece of attitude information as a change of attitude from the reference attitude. In the example of FIG. 13, an attitude indicated by the latest piece of attitude information is expressed by a roll angle θX2, a pitch angle θY2, and a yaw angle θZ2. The display control module 102 determines whether a change of attitude from the reference attitude is a predetermined change (for example, a change of attitude by an amount equal to or more than a threshold value). The display control module 102 does not change display of the code screen SC when it is not determined that a change of attitude from the reference attitude is the predetermined change, and changes display of the code screen SC when it is determined that a change of attitude from the reference attitude is the predetermined change. That is, the display control module 102 changes display of the code screen SC with a determination that a change of attitude from the reference attitude is the predetermined change as a condition (trigger).

Although Modification Example 1-4 differs from Modification Example 1-2 in that the change of attitude for changing display of the code screen SC is a change from the reference attitude, the rest of Modification Example 1-4 may be the same as Modification Example 1-2. In the case in which rotation is used as a change of attitude, Modification Example 1-4 differs from Modification Example 1-3 in that the rotation for changing display of the code screen SC is rotation from the reference attitude, but the rest of Modification Example 1-4 may be the same as Modification Example 1-3.

The display control device 10 of Modification Example 1-4 sets the reference attitude related to an attitude to be used as a reference. The display control device 10 detects a change of attitude from the reference attitude, and changes display of the code screen SC based on the change of attitude from the reference attitude. This enables the display control device 10 to display the code screen SC that changes flexibly in accordance with a change of attitude from the reference attitude on the display unit 15, and user convenience can thus be enhanced. For example, in the case in which the amount of change of attitude from the reference attitude used as a reference for deducing whether the code C is about to be read is equal to or more than a threshold value, it is deduced that the code C is about to be read, and the display control device 10 accordingly changes display of the code screen SC in such a case, to thereby be able to make the code C easy to read.

### [Modification Example 1-5]

For example, in Modification Example 1-4, the reference attitude setting module 104 may set the reference attitude based on a piece of attitude information that is acquired when the code screen SC is displayed on the display unit 15. The reference attitude setting module 104 sets the reference attitude based on a piece of attitude information that is acquired after execution of a program code that indicates display of the code screen SC out of program codes included in the payment application. Processing of the display control module 102 after the reference attitude is set may be the same as in Modification Example 1-4.

In a case in which the code C is not displayed when the code screen SC is displayed, the reference attitude setting module 104 may set the reference attitude based on a piece of attitude information that is acquired at a later time when the code C is displayed. In the case in which the code C is not displayed when the code screen SC is displayed, the code C may be displayed by the user's operation, or may be displayed in response to passing of a predetermined length of time. The reference attitude setting module 104 may set the reference attitude based on a piece of attitude information that is acquired when the code C is displayed.

The display control device 10 of Modification Example 1-5 sets the reference attitude based on a piece of attitude information that is acquired when the code screen SC is displayed on the display unit 15. This enables the display control device 10 to display, on the display unit 15, the code screen SC that changes flexibly in accordance with a change of attitude since display of the code screen SC on the display unit 15, and user convenience can thus be enhanced. For example, an attitude at which the display control device 10 is when the code screen SC is displayed on the display unit 15 is an attitude that allows the user to check display of the code screen SC, and it is accordingly considered that the code C is yet to be read at this attitude. Accordingly, in a case in which this attitude is set as the reference attitude and a large change of attitude from the reference attitude subsequently occurs, it is deduced that the code C is about to be read. The display control device 10 accordingly changes display of the code screen SC in such a case, to thereby be able to make the code C easy to read.

### [Modification Example 1-6]

For example, the display control module 102 may change display of the code screen SC as in FIG. 4 by changing a display position of lower-side content which is displayed below the code C on the code screen SC without changing a display position of upper-side content which is displayed above the code C on the code screen SC. The content is a component (part as a user interface) of the code screen SC. For example, the content may be text, a link, a button, or an input form such as a checkbox, or an image such as an icon. The code C is a type of content as well.

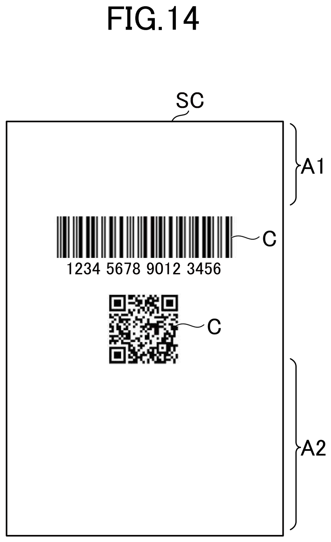

FIG. 14 is a diagram for illustrating an example of the upper-side content and the lower-side content. In FIG. 14, pieces of content of the code screen SC other than the code C are omitted. As in FIG. 14, pieces of content displayed in a display area A1, which is an area of the code screen SC above the code C, are the pieces of upper-side content. In the examples of the code screen SC of FIG. 2 and FIG. 4, text "AAA Pay," a hamburger icon, text indicating a reward point score, and text indicating a balance of electronic money each correspond to the upper-side content.

As in FIG. 14, pieces of content displayed in a display area A2, which is an area of the code screen SC below the code C, are the pieces of lower-side content. In the examples of the code screen SC of FIG. 2 and FIG. 4, text indicating a payment source that is set by the user, a button for setting a payment source, buttons for setting other payment methods such as self-checkout or code reading, and icons of mini applications of bills and the like each correspond to the lower-side content.

For example, the data storage unit 100 stores display position data indicating respective display positions of the pieces of content of the code screen SC. The display position data indicates respective display positions of the pieces of upper-side content, the code C, and the pieces of lower-side content. The display control module 102 does not change the display position of the upper-side content that is indicated by the display position data. The display control module 102 changes the respective display positions of the code C and the lower-side content that are indicated by the display position data so that overlapping of the code C changed in size with the upper-side content and the lower-side content is avoided.

The display control module 102 may be designed so as not to execute changing of display positions as in Modification Example 1-6. For example, the present disclosure also includes the display control module 102 that changes the display position of the upper-side content, the display control module 102 that changes the display position of the lower-side content, the display control module 102 that allows no content to be displayed above the code C (the upper-side content does not exist in the first place), and the display control module 102 that allows no content to be displayed below the code C (the lower-side content does not exist in the first place), or the display control module 102 that is a combination of those.

The display control device 10 of Modification Example 1-6 changes display of the code screen SC by changing the display position of the lower-side content which is displayed below the code C on the code screen SC, without changing the display position of the upper-side content which is displayed above the code C on the code screen SC. This enables the display control device 10 to prevent a drop in visibility of the code screen SC. For example, the display control device 10 can also prevent a situation in which the code C is enlarged beyond a frame of the code screen SC and cannot be read.

### [Modification Example 1-7]

For example, the display control module 102 may change display of the code screen SC by changing the brightness of the code screen SC. Modification Example 1-7 takes, as an example, a case in which the display control module 102 changes the size of the code C in the same manner as in the first embodiment, and changes the brightness of the code screen SC as well. However, the display control module 102 may change the brightness of the code screen SC without changing the size of the code C. That is, the display control module 102 may change display of the code screen SC by changing only the brightness of the code screen SC.

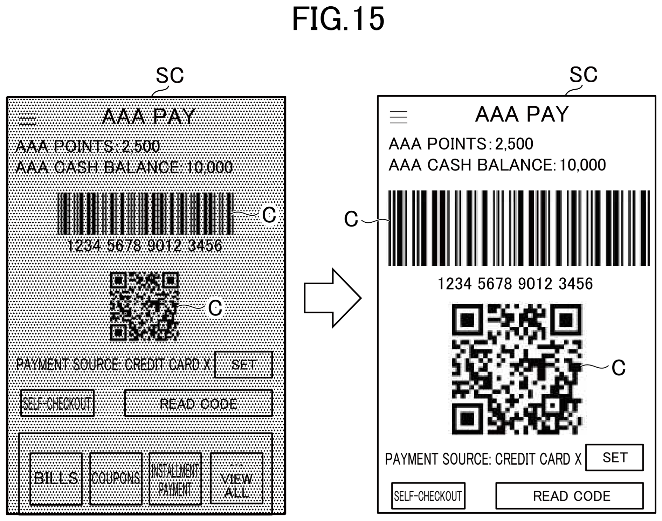

FIG. 15 is a diagram for illustrating an example of the code screen SC that changes brightness in accordance with the attitude of the display control device 10. In FIG. 15, the brightness of the code screen SC is schematically expressed by halftone dots. The code screen SC is darker when the density of halftone dots is higher. That is, the code screen SC is brighter when the density of halftone dots is lower. The code screen SC without halftone dots is brightest. For example, in a case in which the code C is to be read by the presentation-type reading method and the attitude of the display control device 10 changes as in FIG. 3, the display control module 102 makes the code screen SC brighter by changing the brightness of the code screen SC from the brightness on the left-hand side of FIG. 15 to the brightness on the right-hand side of FIG. 15. A change of attitude in the presentation type may be detected in the same manner as in the first embodiment.

For example, in a case in which the code C is read by the pass-over-type reading method and the attitude of the display control device 10 changes as in FIG. 10 or FIG. 11, the display control module 102 makes the code screen SC brighter by changing the brightness of the code screen SC from the brightness on the left-hand side of FIG. 15 to the brightness on the right-hand side of FIG. 15. A change of attitude in the pass-over type may be detected in the same manner as in Modification Example 1-1. The changes of attitude as in Modification Example 1-2 to Modification Example 1-6 are also applicable to Modification Example 1-7.

A method used by the display control module 102 to change the brightness of the code screen SC may be the same as a publicly-known method. For example, in a case in which the data storage unit 100 stores settings of screen brightness as settings of an operating system installed in the display control device 10, the display control module 102 may change the brightness of the code screen SC by changing the settings of screen brightness.

The display control device 10 of Modification Example 1-7 changes display of the code screen SC by changing the brightness of the code screen SC. This enables the display control device 10 to display the code screen SC at brightness that changes flexibly in accordance with the attitude information. For example, at an attitude at which the display control device 10 is not required to prepare for reading of the code C, the display control device 10 does not display the code screen SC that bright, and may instead give priority to the visibility for the user and keeping power consumption low. At an attitude at which the display control device 10 is required to prepare for reading of the code C, the display control device 10 increases the brightness of the code screen SC and thus makes the code C easy to read, to thereby be able to prevent a situation in which reading of the code C takes long. No special operation (for example, tapping on the code screen SC) for changing the brightness of the code screen SC is required of the user, and the display control device 10 can thus lessen a burden of operation on the user.

### [Modification Example 1-8]

For example, the display control module 102 may determine, based on the attitude information, a degree related to changing of display of the code screen SC, and change display of the code screen SC based on the degree. The degree related to changing of display is an amount of change of display. For example, at least one of the size of the code C or the degree of brightness of the code screen SC corresponds to the degree related to changing of display. In Modification Example 1-8, a case in which both of those correspond to the degree related to changing of display is taken as an example. However, the degree related to changing of display may be designed so that only one of the size of the code C or the degree of brightness of the code screen SC corresponds to the degree related to changing of display.

In Modification Example 1-8, it is assumed that a relationship between an attitude indicated by the attitude information and the degree related to changing of display is defined in the payment application. However, the relationship between those may be defined in data separate from the payment application, as settings referred to by the payment application. The display control module 102 determines the degree related to changing of display based on the attitude information and the above-mentioned relationship. For example, the display control module 102 determines the degree related to changing of display so that the degree related to changing of display is higher when the amount of change of attitude indicated by the attitude information is larger, and changes display of the code screen SC based on the determined degree.

In the example of the first embodiment, the display control module 102 determines, as the degree related to changing of display, the size of the code C so that the size of the code C is larger when the tilt of the display control device 10 is greater, and displays the code C having the determined size on the code screen SC. In the case of Modification Example 1-1, the display control module 102 determines, as the degree related to changing of display, the size of the code C so that the size of the code C is larger when the direction of the code screen SC changes more, and displays the code C having the determined size on the code screen SC. In the case of Modification Example 1-3, the display control module 102 determines, as the degree related to changing of display, the size of the code C so that the size of the code C is larger when the amount of rotation of the display control device 10 is larger, and displays the code C having the determined size on the code screen SC.

In the case in which the brightness of the code screen SC is changed as in Modification Example 1-7, the display control module 102 determines, as the degree related to changing of display, the degree of brightness of the code screen SC so that the code screen SC is brighter when the tilt of the display control device 10 is greater, and displays the code screen SC at the determined degree of brightness. The display control module 102 determines, as the degree related to changing of display, the degree of brightness of the code screen SC so that the code screen SC is brighter when the direction of the code screen SC changes more, and displays the code screen SC at the determined degree of brightness. The display control module 102 determines, as the degree related to changing of display, the degree of brightness of the code screen SC so that the code screen SC is brighter when the amount of rotation of the display control device 10 is larger, and displays the code screen SC at the determined degree of brightness.

The display control device 10 of Modification Example 1-8 determines the degree related to changing of display of the code screen SC and changes display of the code screen SC based on the determined degree. This enables the display control device 10 to display the code screen SC that changes more flexibly in accordance with the attitude information on the display unit 15, and user convenience can thus be enhanced. For example, the display control device 10 can enhance flexibility of display of the code screen SC in reading even more by gradually changing at least one of the size of the code C or the brightness of the code screen SC in accordance with an attitude indicated by the attitude information.

### [Modification Example 1-9]

For example, an appropriate size of the code C may be, instead of a large size, a standard size (an initial size at a time when the code screen SC is displayed) or a size smaller than the standard size, depending on the situation in which the code C is read. In the case in which the brightness of the code screen SC is changed as in Modification Example 1-7, the code screen SC of standard brightness is sometimes appropriate and the code screen SC darker than the standard brightness is appropriate in other times. Accordingly, the display control module 102 may change display of the code screen SC repeatedly. In Modification Example 1-9, a case in which the size of the code C is changed as in the first embodiment is taken as an example.

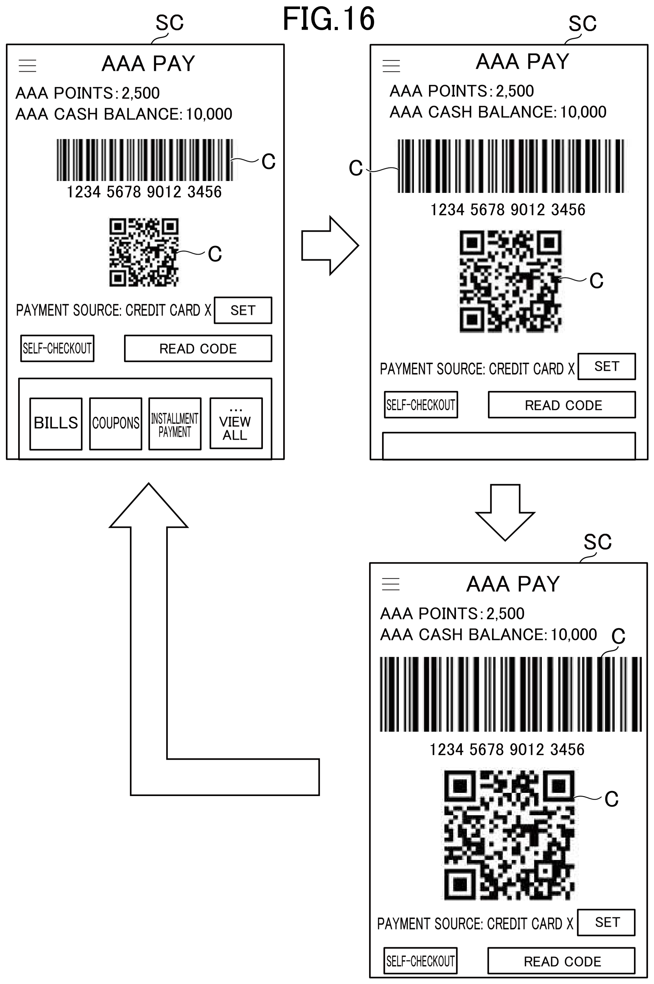

FIG. 16 is a diagram for illustrating an example of how the size of the code C is repeatedly changed. As in FIG. 16, the display control module 102 switches display of the code C between three sizes which are small (a standard size) as in the upper left illustration of FIG. 16, middle as in the upper right illustration of FIG. 16, and large as in the lower right illustration of FIG. 16. For example, the display control module 102 changes the code C to a different size when a predetermined length of time elapses since the code C is started to be displayed. The display control module 102 may determine whether the predetermined length of time has passed by publicly-known time keeping processing. Each time the predetermined length of time elapses, the display control module 102 changes the size of the code C. The display control module 102 may switch the brightness of the code screen SC instead of the size of the code C, between three degrees of brightness such as dark, standard, and bright.

The display control module 102 may switch display of the code screen SC in two stages or four or more stages, instead of three stages as in FIG. 16. The display control module 102 may repeat switching of the size by returning the code C to the small size after executing switching of the size between small, middle, and large as in FIG. 16. Similarly, the display control module 102 may repeat switching of brightness by returning the code screen SC to dark after executing switching of brightness between dark, standard, and bright.

The display control device 10 of Modification Example 1-9 repeatedly changes display of the code screen SC. This enables the display control device 10 to raise a probability at which the code C is correctly read. For example, in a situation in which the code C having the standard size, not the large code C, is appropriate, the code C is read at a time when the display control device 10 returns the code C to the standard size from the large size, and the probability at which the code C is correctly read is consequently raised. The display control device 10 can display the code screen SC adaptive to various situations.

### [Modification Example 1-10]

For example, in Modification Example 1-9, display of the code screen SC may be kept changed until payment is executed. The display control device 10 of Modification Example 1-10 includes the execution determination module 105. For example, the payment application causes the display control device 10 to function as the execution determination module 105. The execution determination module 105 determines whether predetermined processing to be executed when the code C is read by the reading device 20 has been executed. The predetermined processing is as described in the first embodiment, as description of each of the processing execution module 201 and the processing execution module 301.

For example, in the case in which the predetermined processing has been executed, the processing execution module 301 of the server 30 transmits an execution notification indicating that the predetermined processing has been executed to the display control device 10. The execution determination module 105 determines whether the predetermined processing has been executed by determining whether the execution notification has been received from the server 30. The execution notification may be transmitted from a device other than the server 30 (for example, the reading device 20). In this case, the execution determination module 105 determines whether the predetermined processing has been executed by determining whether the execution notification has been received from the other device. In a case in which the display control device 10 executes the predetermined processing, the processing execution module 301 may determine whether the predetermined processing has been executed based on a processing result of a program (for example, the payment application) that executes the predetermined processing.

The display control module 102 in Modification Example 1-10 repeatedly changes display of the code screen SC for duration in which it is determined that the predetermined processing has not been executed. When it is determined that the predetermined processing has been executed, the display control module 102 stops changing display of the code screen SC. The display control module 102 repeats changing of display of the code screen SC until it is determined that the predetermined processing has been executed. When the predetermined processing has been executed, the display control module 102 stops changing display of the code screen SC. When the predetermined processing has been executed, the display control module 102 may cause a transition to a screen other than the code screen SC.

The display control device 10 of Modification Example 1-10 determines whether the predetermined processing to be executed when the code C is read by the reading device 20 has been executed. For the duration in which it is determined that the predetermined processing has not been executed, the display control device 10 repeatedly changes display of the code screen SC. This enables the display control device 10 to repeatedly change display of the code screen SC so that the code screen SC is appropriate for the predetermined processing, until the predetermined processing is executed. As a result, the predetermined processing is accurately executed.

### [4-2. Modification Examples of Second Embodiment]

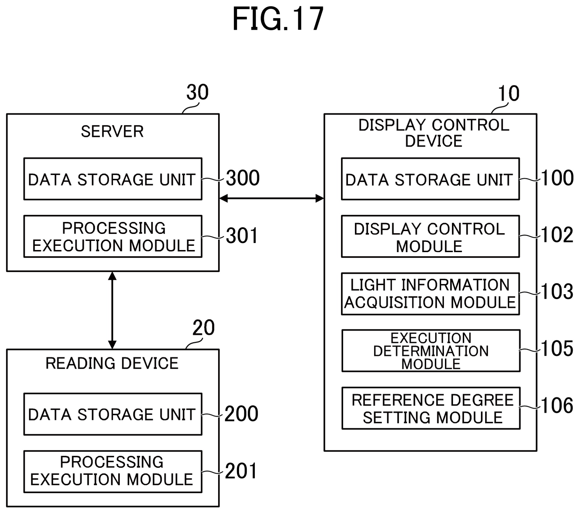

FIG. 17 is a diagram for illustrating an example of functions implemented in the modification examples of the second embodiment. For example, in the display control device 10 of the modification examples of the second embodiment, the execution determination module 105 and a reference degree setting module 106 are implemented. Each of the execution determination module 105 and the reference degree setting module 106 is implemented by the control unit 11.

### [Modification Example 2-1]

For example, the code C may be read by the pass-over-type reading method also in the second embodiment, as in FIG. 11 and FIG. 12. In this case, when the display control device 10 approaches the reading surface of the reading unit 26, light from the light source irradiates the display control device 10 brightly. The display control module 102 accordingly may detect a change in which light turns bright as a change of light, and change display of the code screen SC based on the change in which the light turns bright.

In a case in which a shift from the state of the upper illustration of FIG. 11 to the state of the lower illustration of FIG. 11, or a shift from the state of the upper illustration of FIG. 12 to the state of the lower illustration of FIG. 12 occurs, light indicated by the light information turns bright due to light from the light source inside the reading unit 26. The display control module 102 changes display of the code screen SC when light indicated by the light information turns bright. For example, when light indicated by the light information turns bright, the display control module 102 changes display of the code screen SC so that the code C increases in size as in FIG. 4.

In Modification Example 2-1, the display control module 102 calculates an amount of increase in the degree of brightness of light as an amount of change in the degree of brightness of light. As in the second embodiment, in the case in which the brightness of light is expressed in lux, the display control module 102 does not change display of the code screen SC when it is determined that the amount of increase in lux is less than a threshold value, and changes display of the code screen SC when it is determined that the amount of increase in lux is equal to or more than the threshold value. Although the second embodiment takes, as an example, the case in which the display control module 102 uses the amount of decrease in lux, it suffices that the display control module 102 changes display of the code screen SC based on at least one of the amount of increase in lux or the amount of decrease in lux. The same applies to a case in which an index other than lux is used.

The display control device 10 of Modification Example 2-1 detects, as the change of light, a change in which light turns bright, and changes display of the code screen SC based on the change in which light turns bright. This enables the display control device 10 to display the code screen SC that changes flexibly in response to light turning bright on the display unit 15, and user convenience can thus be enhanced. For example, when the display control device 10 is irradiated brightly with light from the light source as in FIG. 11, the display control device 10 determines that, with the surroundings turned bright, preparation for reading of the code C is to be made, and can prevent a situation in which reading of the code C takes long by increasing the size of the code C.

### [Modification Example 2-2]

For example, in the second embodiment and Modification Example 2-1, a change of light being cast on the display control device 10 may be a change from a reference degree used as a reference. The reference degree is light that serves as a criterion for determination. For example, in a case in which the display control module 102 detects, as a change of light, a difference between light indicated by a piece of light information at a first point in time out of a plurality of points in time and light indicated by a piece of light information at a second point in time out of the plurality of points in time, the light indicated by the piece of information at the first point in time is an example of the reference degree. In Modification Example 2-2, other examples of the reference degree are described.

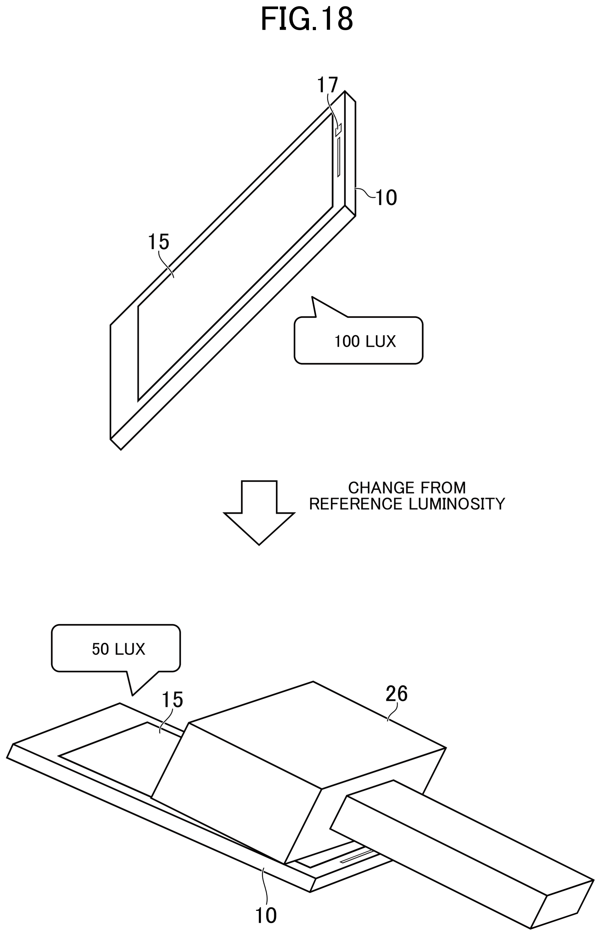

FIG. 18 is a diagram for illustrating an example of the reference degree. In the example of FIG. 18, the reference degree is 100 lux, which is the degree of brightness of light at one point in time. The display control device 10 of Modification Example 2-2 includes the reference degree setting module 106. For example, the payment application causes the display control device 10 to further function as the reference degree setting module 106. The reference degree setting module 106 sets the reference degree related to the degree of brightness of light to be used as a reference. Reference degree data indicating the reference degree may be stored in advance in the data storage unit 100, but Modification Example 2-2 takes, as an example, a case in which the reference degree setting module 106 dynamically sets the reference degree in accordance with the situation of the display control device 10. The reference degree setting module 106 sets the reference degree by recording the reference degree data in the data storage unit 100.

For example, the reference degree setting module 106 sets, as the reference degree, the degree of brightness indicated by a piece of light information acquired at a predetermined point in time. The predetermined point in time is a point in time at which the reference degree setting module 106 is to set the reference degree. It is assumed that data indicating the predetermined point in time is stored in the data storage unit 100 in advance. The reference degree setting module 106 determines whether the predetermined point in time has arrived based on the data. The reference degree setting module 106 sets, as the reference degree, the degree of brightness indicated by a piece of light information that is acquired when it is determined that the predetermined point in time has arrived. The light information acquisition module 103 may start acquiring the light information continually before the predetermined point in time arrives, or may acquire the light information when it is determined that the predetermined point in time has arrived.

The predetermined point in time may be any point in time. For example, in a case in which a point in time at which the payment application is started corresponds to the predetermined point in time, the reference degree setting module 106 sets, as the reference degree, the degree of brightness indicated by a piece of light information that is acquired when the payment application is started. In a case in which a point in time at which login processing for logging in to the payment service succeeds corresponds to the predetermined point in time, the reference degree setting module 106 sets, as the reference degree, the degree of brightness indicated by a piece of light information that is acquired when the login processing succeeds. In a case in which a point in time at which the user performs predetermined operation corresponds to the predetermined point in time, the reference degree setting module 106 sets, as the reference degree, the degree of brightness indicated by a piece of light information that is acquired when the user performs predetermined operation.

The display control module 102 in Modification Example 2-2 changes display of the code screen SC based on a change of light from the reference degree. For example, the display control module 102 detects, as a change of light from the reference degree, a difference between the reference degree and the degree of brightness indicated by the latest piece of light information. In the example of FIG. 18, the degree of brightness indicated by the latest piece of light information is 50 lux. The display control module 102 determines whether a change of light from the reference degree is a predetermined change (for example, a change of light by an amount equal to or more than a threshold value). The display control module 102 does not change display of the code screen SC when it is not determined that a change of light from the reference degree is the predetermined change, and changes display of the code screen SC when it is determined that a change of light from the reference degree is the predetermined change. That is, the display control module 102 changes display of the code screen SC with a determination that a change of light from the reference degree is the predetermined change as a condition (trigger).

Although Modification Example 2-2 differs from the second embodiment in that the change of light for changing display of the code screen SC is a change from the reference degree, the rest of Modification Example 2-2 may be the same as the second embodiment. For example, the display control module 102 determines whether the amount of change in the degree of brightness from the reference degree is equal to or more than a threshold value. The display control module 102 does not change display of the code screen SC when it is not determined that the amount of change in the degree of brightness from the reference degree is equal to or more than the threshold value, and changes display of the code screen SC when it is determined that the amount of change in the degree of brightness from the reference degree is equal to or more than the threshold value.

The display control device 10 of Modification Example 2-2 sets the reference degree related to the degree of brightness of light to be used as a reference. The display control device 10 changes display of the code screen SC based on the change of light from the reference degree. This enables the display control device 10 to display the code screen SC that changes flexibly in accordance with a change of the degree of brightness from the reference degree on the display unit 15, and user convenience can thus be enhanced. For example, in the case in which the amount of change of the degree of brightness from the reference degree used as a reference for deducing whether the code C is about to be read is equal to or more than a threshold value, it is deduced that the code C is about to be read, and the display control device 10 accordingly changes display of the code screen SC in such a case, to thereby be able to make the code C easy to read.

### [Modification Example 2-3]

For example, in Modification Example 2-2, the reference degree setting module 106 may set the reference degree based on a piece of light information that is acquired when the code screen SC is displayed on the display unit 15. The reference degree setting module 106 sets the reference degree based on a piece of light information that is acquired after execution of a program code that indicates display of the code screen SC out of program codes included in the payment application. Processing of the display control module 102 after the reference degree is set may be the same as in Modification Example 2-2.

In a case in which the code C is not displayed when the code screen SC is displayed, the reference degree setting module 106 may set the reference degree based on a piece of light information that is acquired when the code C is displayed on the code screen SC. In the case in which the code C is not displayed when the code screen SC is displayed, the code C may be displayed by the user's operation, or may be displayed in response to passing of a predetermined length of time. The reference degree setting module 106 may set the reference degree based on a piece of light information that is acquired when the code C is displayed.

The display control device 10 of Modification Example 2-3 sets the reference degree based on a piece of light information that is acquired when the code screen SC is displayed on the display unit 15. This enables the display control device 10 to display, on the display unit 15, the code screen SC that changes flexibly in accordance with a change of light since display of the code screen SC on the display unit 15, and user convenience can thus be enhanced. For example, when the code screen SC is displayed on the display unit 15, the user checks display of the code screen SC, and it is accordingly considered that the code C is yet to be read. Accordingly, in a case in which the degree of brightness of light at this time is set as the reference degree and a large change of the degree of brightness from the reference degree subsequently occurs, it is deduced that the code C is about to be read. The display control device 10 accordingly changes display of the code screen SC in such a case, to thereby be able to make the code C easy to read.

### [Modification Example 2-4]

For example, the light information acquisition module 103 may acquire, as the light information, color information about a color of light instead of the brightness of light. In the example of FIG. 3, the reading unit 26 reads the code C with use of light from a light source including such a light source as a red LED in some case. When it is the case, light being cast on the display control device 10 is red. In the examples of FIG. 11 and FIG. 12, the reading unit 26 reads the code C by irradiating the display control device 10 with light from a light source including such a light source as a white LED in some cases. When it is the case, light being cast on the display control device 10 is white.

In Modification Example 2-4, the sensor unit 16 includes a light color sensor capable of detecting a color of light. For example, the light color sensor may be an RGB sensor, a color sensor, a spectroscopic sensor, or other sensors. The light information acquisition module 103 acquires light information that indicates a color of light, based on a detection signal of the sensor unit 16. The color of light indicated by the light information may be any color. For example, the light information may only indicate the presence or absence of a specific color, or may indicate each of a plurality of colors. The light information may indicate the degree of brightness of each color.

The display control module 102 in Modification Example 2-4 changes display of the code screen SC based on color information. For example, the display control module 102 does not change display of the code screen SC when the color information does not indicate light of a specific color, and changes display of the code screen SC when the color information indicates light of the specific color. The specific color is a color used as a criterion for determination on whether to change display of the code screen SC. The specific color may be any color determined in advance. In the example of FIG. 3, the specific color may be red. The display control module 102 does not change display of the code screen SC when the color information does not indicate red light, and changes display of the code screen SC when the color information indicates red light. In the examples of FIG. 11 and FIG. 12, the specific color may be white. The display control module 102 does not change display of the code screen SC when the color information does not indicate white light, and changes display of the code screen SC when the color information indicates white light.

The display control device 10 of Modification Example 2-4 acquires color information about a color of light as the light information. The display control device 10 changes display of the code screen SC based on the color information. This enables the display control device 10 to display the code screen SC that changes flexibly in accordance with the color of light indicated by the light information on the display unit 15, and user convenience can thus be enhanced. For example, the display control device 10 deduces that the reading unit 26 that includes a red LED or the like is near based on the color information, and changes display of the code screen SC in a situation in which the display control device 10 is to prepare for presentation-type reading, to thereby be able to make the code C easy to read and thus prevent a situation in which reading of the code C takes long. For example, in a case in which the reading unit 26 uses light having a color that is not found often in surroundings of the user, such as light from a red LED, the display control device 10 can reduce possibility of erroneous detection. The display control device 10 deduces that the reading unit 26 that includes a white LED or the like is near based on the color information, and changes display of the code screen SC in a situation in which the display control device 10 is to prepare for pass-over-type reading, to thereby be able to make the code C easy to read and thus prevent a situation in which reading of the code C takes long. Although white light may be found in the surroundings of the user, as a general rule, there is no situation in which the display control device 10 is surrounded by intense white light in everyday life other than in pass-over-type reading, and the display control device 10 can accordingly deduce that the reading unit 26 is near in such a case.

### [Modification Example 2-5]

For example, in Modification Example 2-4, the light information acquisition module 103 may acquire the color information based on the front-facing camera of the display control device 10. That is, the light information acquisition module 103 may acquire the color information by performing image analysis on a photographed image generated by the front-facing camera of the display control device 10, instead of using a detection signal of the sensor unit 16. The light information acquisition module 103 may comprehensively analyze both of the detection signal of the sensor unit 16 and the photographed image to acquire the color information.

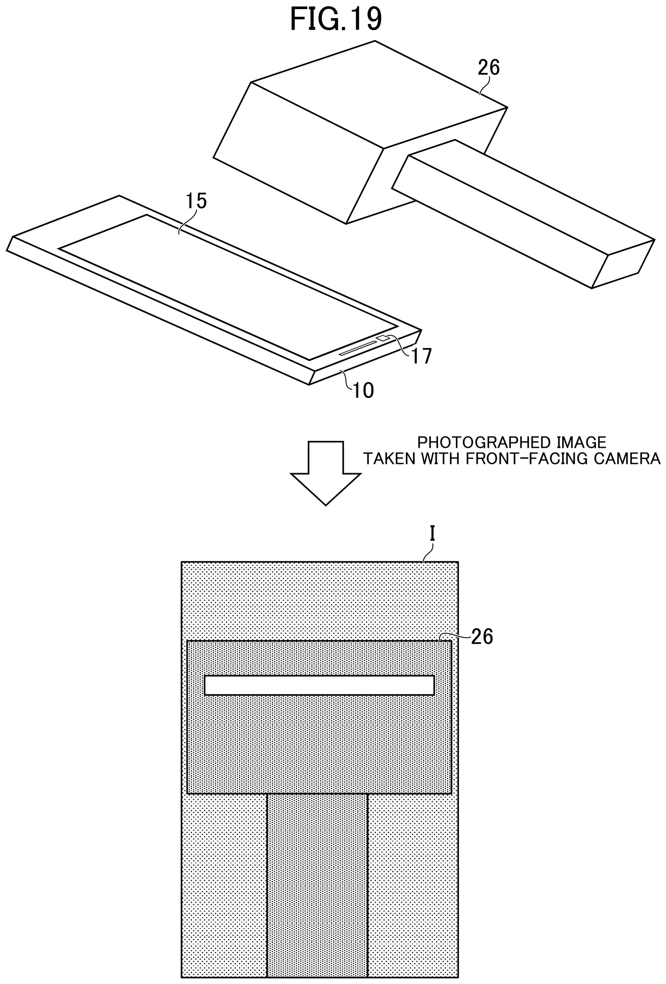

FIG. 19 is a diagram for illustrating an example of the photographed image. As in the upper illustration of FIG. 19, the front-facing camera of the photographing unit 17 photographs a surface of the display control device 10 on which the display unit 15 is placed, in a direction of the perpendicular of the surface, to generate a photographed image I. The front-facing camera may repeatedly generate the photographed image I based on a frame rate determined in advance. The light information acquisition module 103 determines whether there is a locally bright spot based on the photographed image I. When it is determined that the photographed image I has a locally bright spot, the light information acquisition module 103 acquires color information indicating a color of the spot.

In a case in which a color of light emitted by the reading unit 26 is known in advance, the light information acquisition module 103 may determine whether a color that is the same as or similar to the color of the light emitted by the reading unit 26 is locally shown in the photographed image I. A color similar to the light emitted by the reading unit 26 is a color having a pixel value that differs from a pixel value of the light emitted by the reading unit 26 by an amount less than a threshold value. In a case in which a specific color of light is shown in the photographed image I, the light information acquisition module 103 acquires the light information that indicates that the specific color of light is shown in the photographed image I. In the example of FIG. 3, the light information acquisition module 103 acquires the light information that indicates that red light is shown in the photographed image I in a case in which red light is shown in the photographed image I. In the examples of FIG. 11 and FIG. 12, the light information acquisition module 103 acquires the light information that indicates that white light is shown in the photographed image I in a case in which red or white light is shown in the photographed image I.

The display control device 10 of Modification Example 2-5 acquires the color information based on the front-facing camera of the display control device 10. This enables the display control device 10 to acquire the light information without using a special sensor for detecting light. For example, in a case in which the display control device 10 is a smartphone, the display control device 10 can acquire the light information by utilizing the front-facing camera which the reading unit 26 inevitably approaches in reading of the code C (the front-facing camera having an image pickup range into which the reading unit 26 inevitably enters in reading of the code C).

### [Modification Example 2-6]

For example, also in the second embodiment, as in Modification Example 1-6, the display control module 102 may change display of the code screen SC by changing the display position of the lower-side content which is displayed below the code C on the code screen SC, without changing the display position of the upper-side content which is displayed above the code C on the code screen SC. Modification Example 2-6 is different in that this processing is executed based on the light information, but details of this processing are as described in Modification Example 1-6.

As in Modification Example 1-6, the display control device 10 of Modification Example 2-6 can prevent a drop in visibility of the code screen SC by a code. For example, the display control device 10 can also prevent a situation in which the code C is enlarged beyond a frame of the code screen SC and cannot be read.

### [Modification Example 2-7]

For example, also in the second embodiment, as in Modification Example 1-7, the display control module 102 may change display of the code screen SC by changing the brightness of the code screen SC. Modification Example 2-7 takes, as an example, a case in which the display control module 102 changes the size of the code C in the same manner as in the second embodiment, and changes the brightness of the code screen SC as well. However, the display control module 102 may change the brightness of the code screen SC without changing the size of the code C. That is, the display control module 102 may change display of the code screen SC by changing only the brightness of the code screen SC.

For example, the display control module 102 may change display of the code screen SC so that the code screen SC increases in brightness when light indicated by the light information is brighter. That is, the display control module 102 may change display of the code screen SC so that the code screen SC decreases in brightness when light indicated by the light information is darker. Conversely, the display control module 102 may change display of the code screen SC so that the code screen SC decreases in brightness when light indicated by the light information is brighter. That is, the display control module 102 may change display of the code screen SC so that the code screen SC increases in brightness when light indicated by the light information is darker.

The display control device 10 of Modification Example 2-7 changes display of the code screen SC by changing the brightness of the code screen SC. This enables the display control device 10 to display the code screen SC at brightness that changes flexibly in accordance with the light information. For example, in a situation in which the display control device 10 is not required to prepare for reading of the code C, the display control device 10 does not display the code screen SC that bright, and may instead give priority to the visibility for the user and keeping power consumption low. In a situation in which the display control device 10 is required to prepare for reading of the code C, the display control device 10 increases the brightness of the code screen SC and thus makes the code C easy to read, to thereby be able to prevent a situation in which reading of the code C takes long. No special operation (for example, tapping on the code screen SC) for changing the brightness of the code screen SC is required of the user, and the display control device 10 can thus lessen a burden of operation on the user.

### [Modification Example 2-8]

For example, the display control module 102 may determine, based on the light information, a degree related to changing of display of the code screen SC, and change display of the code screen SC based on the degree. The meaning of the degree related to changing of display is as described in Modification Example 1-8. In Modification Example 2-8, a case in which both of those correspond to the degree related to changing of display is taken as an example. However, the degree related to changing of display may be designed so that only one of the size of the code C and the degree of brightness of the code screen SC corresponds to the degree related to changing of display.

In Modification Example 2-8, it is assumed that a relationship between light indicated by the light information and the degree related to changing of display is defined in the payment application. However, the relationship between those may be defined in data separate from the payment application, as settings referred to by the payment application. The display control module 102 determines the degree related to changing of display based on the light information and the above-mentioned relationship. For example, the display control module 102 determines the degree related to changing of display so that the degree related to changing of display is higher when the amount of change of light indicated by the light information is larger, and changes display of the code screen SC based on the determined degree.

In the example of the second embodiment, the display control module 102 determines the size of the code C as the degree related to changing of display so that the code C increases in size when the amount of change of light indicated by the light information is larger, and displays the code C having the determined size on the code screen SC. In the case of Modification Example 2-7, the display control module 102 determines the degree of brightness of the code screen SC as the degree related to changing of display so that the code screen SC is brighter when the amount of change of light indicated by the light information is larger, and displays the code screen SC having the determined degree of brightness.

The display control device 10 of Modification Example 2-8 determines the degree related to changing of display of the code screen SC based on the light information, and changes display of the code screen SC based on the determined degree. This enables the display control device 10 to display the code screen SC that changes more flexibly in accordance with the light information on the display unit 15, and user convenience can thus be enhanced. For example, maximum brightness of the code screen SC in a place dimmer than normal, such as a movie theater or an event venue, may render the code screen SC undesirably conspicuous. The display control device 10 can prevent the code screen SC from becoming conspicuous by keeping the degree of brightness of the code screen SC low in such a case.

### [Modification Example 2-9]

For example, the display control module 102 may repeatedly change display of the code screen SC also in the second embodiment as in Modification Example 1-9. As in Modification Example 1-9, the display control module 102 may switch the size of the code C and may switch the brightness of the code screen SC. Modification Example 2-9 is different in that this processing is executed based on the light information, but processing of repeatedly changing display of the code screen SC is the same as in Modification Example 1-9.

The display control device 10 of Modification Example 2-9 repeatedly changes display of the code screen SC. This enables the display control device 10 to raise a probability at which the code C is correctly read. For example, in a situation in which the code C having the standard size, not the large code C, is appropriate, the code C is read at a time when the display control device 10 returns the code C to the standard size from the large size, and the probability at which the code C is correctly read is consequently raised.

### [Modification Example 2-10]

For example, the display control device 10 may include the execution determination module 105 also in the second embodiment as in Modification Example 1-10. The display control module 102 may repeatedly change display of the code screen SC for the duration in which it is determined that the predetermined processing has not been executed. Those processing procedures are as described in Modification Example 1-10.

The display control device 10 of Modification Example 2-10 determines whether the predetermined processing to be executed when the code C is read by the reading device 20 has been executed. For the duration in which it is determined that the predetermined processing has not been executed, the display control device 10 repeatedly changes display of the code screen SC. This enables the display control device 10 to repeatedly change display of the code screen SC so that the code screen SC is appropriate for the predetermined processing, until the predetermined processing is executed. As a result, the predetermined processing is accurately executed.

### [Modification Example 2-11]

For example, the display control module 102 may deduce, based on the light information, a distance between the display control device 10 and the reading device 20 which reads the code C, and change display of the code screen SC based on the distance. The display control module 102 in Modification Example 2-11 deduces the distance based on the degree of brightness that is indicated by the light information. For example, with the pass-over-type reading method, the degree of brightness increases as the display control device 10 moves closer to the reading unit 26, and the display control module 102 accordingly deduces the distance so that the distance is shorter when the degree of brightness is higher. That is, the display control module 102 deduces the distance so that the distance is longer when the degree of brightness is lower. The display control module 102 may be designed so as not to change display of the code screen SC when the distance is equal to or more than a threshold value, and so as to change display of the code screen SC when the distance is less than the threshold value.

The display control device 10 of Modification Example 2-11 deduces, based on the light information, the distance between the display control device 10 and the reading device 20 which reads the code C, and changes display of the code screen SC based on the distance. This enables the display control device 10 to display the code screen SC that changes flexibly in accordance with the distance on the display unit 15, and user convenience can thus be enhanced. For example, when the distance grows shorter and consequently brings about a situation in which the display control device 10 is required to prepare for reading of the code C, the display control device 10 increases the code C in size and can thus prevent a situation in which reading of the code C takes long.

### [4-3. Modification Examples of Third Embodiment]

For example, the modification examples of the first embodiment may be applied to the display control device 10 of the third embodiment. The modification examples of the second embodiment may be applied to the display control device 10 of the third embodiment. For example, the display control module 102 may determine whether the code C is about to be read with the reading unit 26 based on a predetermined determination method, and increase the brightness of the code screen SC based on a result of the determination.

### [4-4. Other Modification Examples]

For example, two or three out of the modification examples of the first embodiment, the modification examples of the second embodiment, and the modification examples of the third embodiment may be combined.

For example, the display control device 10 is not limited to a device operated by the user. The display control device 10 may be a device that is not operated by the user. The display control device 10 may be a device of a store. For example, the display control device 10 may display, on the display unit 15, the code screen SC that includes the code C generated based on a store ID with which the store is identifiable. In this case, a terminal such as a smartphone of the user may correspond to the reading device 20. A shop clerk turns the display control device 10 that is a tablet computer or the like of the store toward the user, and prompts the user to execute reading of the code C. In such a case, the display control device 10 that is a tablet computer or the like of the store may change display of the code screen SC based on at least one of the attitude information or the light information.

For example, the functions described as functions implemented by the display control device 10 may be implemented by the reading device 20, the server 30, or another computer. The processing described as processing implemented by the display control device 10 may be distributed among a plurality of computers. The functions described as functions implemented by the reading device 20 may be implemented by the display control device 10, the server 30, or another computer. The functions described as functions implemented by the server 30 may be implemented by the display control device 10, the reading device 20, or another computer.

### [5. Supplementary Notes]

For example, the program according to the present disclosure may also be configured as follows.

### [5-1. Supplementary Notes of First Embodiment]

For example, a program according to the first embodiment may also be configured as follows.
(1-1) A program for causing a display control device to function as:
   a display control module configured to display a code screen including a code on a display unit of the display control device; and
   an attitude information acquisition module configured to acquire, when the code screen is displayed on the display unit, attitude information about an attitude of the display control device,
   wherein the display control module is configured to change display of the code screen based on the attitude information.
(1-2) The program according to Item (1-1),
   wherein the attitude information acquisition module is configured to acquire, as the attitude information, tilt information about a tilt of the display control device, and
   wherein the display control module is configured to change display of the code screen based on the tilt information.
(1-3) The program according to Item (1-2),
   wherein the attitude information acquisition module is configured to acquire, as the tilt information, tilt-and-extra information about the tilt of the display control device and about a direction of the code screen, and
   wherein the display control module is configured to change display of the code screen based on the tilt-and-extra information.
(1-4) The program according to any one of Items (1-1) to (1-3),
   wherein the attitude information acquisition module is configured to acquire a piece of the attitude information at each of a plurality of points in time, and
   wherein the display control module is configured to detect a change of the attitude based on the piece of the attitude information at the each of the plurality of points in time, and change display of the code screen based on the change of the attitude.
(1-5) The program according to Item (1-4), wherein the display control module is configured to detect, as the change of the attitude, rotation of the display control device, and change display of the code screen based on the rotation of the display control device.
(1-6) The program according to Item (1-4) or (1-5),
   wherein the program causes the display control device to further function as a reference attitude setting module configured to set a reference attitude related to the attitude that is used as a reference, and
   wherein the display control module is configured to detect a change of the attitude from the reference attitude, and change display of the code screen based on the change of the attitude from the reference attitude.
(1-7) The program according to Item (1-6), wherein the reference attitude setting module is configured to set the reference attitude based on a piece of the attitude information that is acquired when the code screen is displayed on the display unit.
(1-8) The program according to any one of Items (1-1) to (1-7), wherein the display control module is configured to change display of the code screen by changing a size of the code on the code screen.
(1-9) The program according to Item (1-8), wherein the display control module is configured to change display of the code screen by changing a display position of lower-side content displayed below the code on the code screen, without changing a display position of upper-side content displayed above the code on the code screen.
(1-10) The program according to any one of Items (1-1) to (1-9), wherein the display control module is configured to change display of the code screen by changing brightness of the code screen.
(1-11) The program according to any one of Items (1-1) to (1-10), wherein the display control module is configured to determine, based on the attitude information, a degree related to changing of display of the code screen, and change display of the code screen based on the determined degree.
(1-12) The program according to any one of Items (1-1) to (1-11), wherein the display control module is configured to repeatedly change display of the code screen.
(1-13) The program according to Item (1-12),
   wherein the program causes the display control device to further function as an execution determination module configured to determine whether predetermined processing to be executed when the code is read by a reading device has been executed, and
   wherein the display control module is configured to repeatedly change display of the code screen for duration in which it is determined that the predetermined processing has not been executed.

### [5-2. Supplementary Notes of Second Embodiment]

For example, a program according to the second embodiment may also be configured as follows.
(2-1) A program for causing a display control device to function as:
   a display control module configured to display a code screen including a code on a display unit of the display control device; and
   a light information acquisition module configured to acquire, when the code screen is displayed on the display unit, light information about light being cast on the display control device,
   wherein the display control module is configured to change display of the code screen based on the light information.
(2-2) The program according to Item (2-1),
   wherein the light information acquisition module is configured to acquire a piece of the light information at each of a plurality of points in time, and
   wherein the display control module is configured to detect a change of the light based on the piece of the light information at the each of the plurality of points in time, and change display of the code screen based on the change of the light.
(2-3) The program according to Item (2-2), wherein the display control module is configured to detect, as the change of the light, a change in which the light turns dim, and change display of the code screen based on the change in which the light turns dim.
(2-4) The program according to Item (2-2) or (2-3), wherein the display control module is configured to detect, as the change of the light, a change in which the light turns bright, and change display of the code screen based on the change in which the light turns bright.
(2-5) The program according to any one of Items (2-2) to (2-4),
   wherein the program causes the display control device to further function as a reference degree setting module configured to set a reference degree related to a degree of brightness of the light to be used as a reference, and
   wherein the display control module is configured to change display of the code screen based on a change of the light from the reference degree.
(2-6) The program according to Item (2-5), wherein the reference degree setting module is configured to set the reference degree based on a piece of the light information that is acquired when the code screen is displayed on the display unit.
(2-7) The program according to any one of Items (2-1) to (2-6),
   wherein the light information acquisition module is configured to acquire, as the light information, color information about a color of the light, and
   wherein the display control module is configured to change display of the code screen based on the color information.
(2-8) The program according to Item (2-7), wherein the light information acquisition module is configured to acquire the color information based on a front-facing camera of the display control device.
(2-9) The program according to any one of Items (2-1) to (2-8), wherein the display control module is configured to change display of the code screen by changing a size of the code on the code screen.
(2-10) The program according to Item (2-9), wherein the display control module is configured to change display of the code screen by changing a display position of lower-side content displayed below the code on the code screen, without changing a display position of upper-side content displayed above the code on the code screen.
(2-11) The program according to any one of Items (2-1) to (2-10), wherein the display control module is configured to change display of the code screen by changing brightness of the code screen.
(2-12) The program according to any one of Items (2-1) to (2-11), wherein the display control module is configured to determine, based on the light information, a degree related to changing of display of the code screen, and change display of the code screen based on the determined degree.
(2-13) The program according to any one of Items (2-1) to (2-12), wherein the display control module is configured to repeatedly change display of the code screen.
(2-14) The program according to Item (2-13),
   wherein the program causes the display control device to further function as an execution determination module configured to determine whether predetermined processing to be executed when the code is read by a reading device has been executed, and
   wherein the display control module is configured to repeatedly change display of the code screen for duration in which it is determined that the predetermined processing has not been executed.
(2-15) The program according to any one of Items (2-1) to (2-14), wherein the display control module is configured to deduce, based on the light information, a distance between the display control device and a reading device configured to read the code, and change display of the code screen based on the distance.

### [5-3. Supplementary Notes of Third Embodiment]

For example, a program according to the third embodiment may also be configured as follows.
(3-1) A program for causing a display control device to function as a display control module configured to display a code screen including a code on a display unit of the display control device,
   wherein the display control module is configured to determine, based on a predetermined determination method, whether the code is about to be read by a reading device, and change display of the code screen based on a result of the determination.
(3-2) The program according to Item (3-1), wherein the predetermined determination method is a determination method based on the attitude information of any one of Items (1-1) to (1-13), and has the function of any one of Items (1-1) to (1-13).
(3-3) The program according to Item (3-1) or (3-2), wherein the predetermined determination method is a determination method based on the light information of any one of Items (2-1) to (2-15), and has the function of any one of Items (2-1) to (2-15).

## Claims

1. A program for causing a display control device to function as:
a display control module configured to display a code screen including a code on a display unit of the display control device; and
an attitude information acquisition module configured to acquire, when the code screen is displayed on the display unit, attitude information about an attitude of the display control device,
wherein the display control module is configured to change display of the code screen based on the attitude information.

2. The program according to claim 1,
wherein the attitude information acquisition module is configured to acquire, as the attitude information, tilt information about a tilt of the display control device, and
wherein the display control module is configured to change display of the code screen based on the tilt information.

3. The program according to claim 2,
wherein the attitude information acquisition module is configured to acquire, as the tilt information, tilt-and-extra information about the tilt of the display control device and about a direction of the code screen, and
wherein the display control module is configured to change display of the code screen based on the tilt-and-extra information.

4. The program according to any one of claims 1 to 3,
wherein the attitude information acquisition module is configured to acquire a piece of the attitude information at each of a plurality of points in time, and
wherein the display control module is configured to detect a change of the attitude based on the piece of the attitude information at the each of the plurality of points in time, and change display of the code screen based on the change of the attitude.

5. The program according to claim 4, wherein the display control module is configured to detect, as the change of the attitude, rotation of the display control device, and change display of the code screen based on the rotation of the display control device.

6. The program according to claim 4,
wherein the program causes the display control device to further function as a reference attitude setting module configured to set a reference attitude related to the attitude that is used as a reference, and
wherein the display control module is configured to detect a change of the attitude from the reference attitude, and change display of the code screen based on the change of the attitude from the reference attitude.

7. The program according to claim 6, wherein the reference attitude setting module is configured to set the reference attitude based on a piece of the attitude information that is acquired when the code screen is displayed on the display unit.

8. The program according to any one of claims 1 to 3, wherein the display control module is configured to change display of the code screen by changing a size of the code on the code screen.

9. The program according to claim 8, wherein the display control module is configured to change display of the code screen by changing a display position of lower-side content displayed below the code on the code screen, without changing a display position of upper-side content displayed above the code on the code screen.

10. The program according to any one of claims 1 to 3, wherein the display control module is configured to change display of the code screen by changing brightness of the code screen.

11. The program according to any one of claims 1 to 3, wherein the display control module is configured to determine, based on the attitude information, a degree related to changing of display of the code screen, and change display of the code screen based on the determined degree.

12. The program according to any one of claims 1 to 3, wherein the display control module is configured to repeatedly change display of the code screen.

13. The program according to claim 12,
wherein the program causes the display control device to further function as an execution determination module configured to determine whether predetermined processing to be executed when the code is read by a reading device has been executed, and
wherein the display control module is configured to repeatedly change display of the code screen for duration in which it is determined that the predetermined processing has not been executed.

14. A display control device, comprising:
a display control module configured to display a code screen including a code on a display unit of the display control device; and
an attitude information acquisition module configured to acquire, when the code screen is displayed on the display unit, attitude information about an attitude of the display control device,
wherein the display control module is configured to change display of the code screen based on the attitude information.

15. A display control method, comprising:
a display control step of displaying a code screen including a code on a display unit of a display control device; and
an attitude information acquisition step of acquiring, when the code screen is displayed on the display unit, attitude information about an attitude of the display control device,
wherein the display control step includes changing display of the code screen based on the attitude information.
